# EUROPEAN PATENT APPLICATION

(11) **EP 4 683 329 A1**
(43) Date of publication of application: **21.01.2026**
(21) Application number: 24774649.8
(22) Date of filing: 04.03.2024
(51) Int. Cl.: H04N 19/597, G06T 9/00, H04N 19/13

(54) **ENCODING DEVICE, DECODING DEVICE, ENCODING METHOD, AND DECODING METHOD**

(30) Priority: 17.03.2023 US 202363452756 P; 17.03.2023 US 202363452764 P
(71) Applicant: Panasonic Intellectual Property Corporation of America, Torrance, CA 90504 (US)
(72) Inventor: NISHI, Takahiro, Kadoma-shi, Osaka 571-0057 (JP); SUGIO, Toshiyasu, Kadoma-shi, Osaka 571-0057 (JP); IGUCHI, Noritaka, Kadoma-shi, Osaka 571-0057 (JP); ITO, Atsushi, Kadoma-shi, Osaka 571-0057 (JP)
(74) Representative: Grünecker Patent- und Rechtsanwälte PartG mbB
(86) International application number: PCT/JP2024/008126
(87) International publication number: WO 2024/195505

(57) **Abstract**

Encoding device (100) includes memory (152) and a circuit (151) accessible to the memory (152). In operation, the circuit (151): for each of faces forming a three-dimensional mesh, encodes a connection type regarding a connection relationship between the face to be processed and a face not yet processed, using arithmetic encoding based on a context; and in encoding a current connection type, selects the context to be applied to the arithmetic encoding from among contexts using a previous connection type. The current connection type is the connection type to be encoded. The previous connection type is the connection type encoded before the current connection type.

## Description

### [Technical Field]

The present disclosure relates to, for example, an encoding device.

### [Background Art]

PTL 1 proposes a method and a device for encoding and decoding three-dimensional mesh data. Moreover, NPL1 discloses a technique related to encoding and decoding three-dimensional mesh data.

### [Citation List]

### [Patent Literature]

[PTL 1] Japanese Unexamined Patent Application Publication No. 2006-187015

### [Non Patent Literature]

[NPL 1] Jarek Rossignac et el., "3D Compression Made Simple: Edgebreaker on a Corner-Table", [online], [searched on January 27, 2024], <URL:https://www.cs.cmu.edu/~alla/edgebreaker_simple.pdf>

### [Summary of Invention]

### [Technical Problem]

There are demands for further improvement in processing of encoding three-dimensional data and the like. An object of the present disclosure is to improve processing of encoding three-dimensional data and the like.

### [Solution to Problem]

An encoding method according to one aspect of the present disclosure includes: memory; and a circuit accessible to the memory. In operation, the circuit: for each of faces forming a three-dimensional mesh, encodes a connection type regarding a connection relationship between the face to be processed and a face not yet processed, using arithmetic encoding based on a context; and in encoding a current connection type, selects the context to be applied to the arithmetic encoding from among contexts using a previous connection type. The current connection type is the connection type to be encoded. The previous connection type is the connection type encoded before the current connection type.

Noted that these general or specific aspects may be implemented using a system, a device, a method, an integrated circuit, a computer program, or a non-transitory computer-readable recording medium such as a CD-ROM, or any combination of systems, devices, methods, integrated circuits, computer programs, and recording media.

### [Advantageous Effects of Invention]

The present disclosure can contribute toward improving processing of encoding three-dimensional data and the like.

### [Brief Description of Drawings]

[FIG. 1]

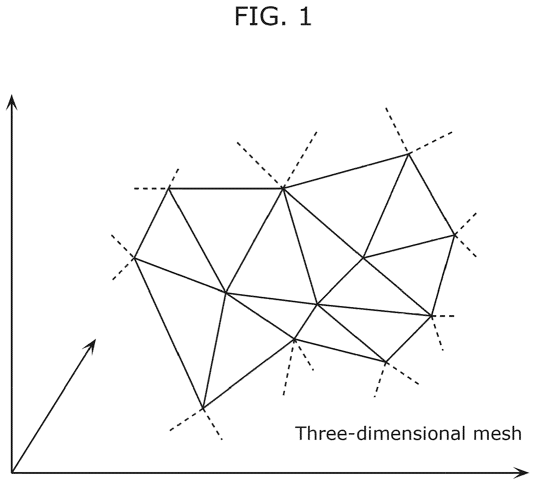

   FIG. 1 is a conceptual diagram illustrating a three-dimensional mesh according to an embodiment.
[FIG. 2]

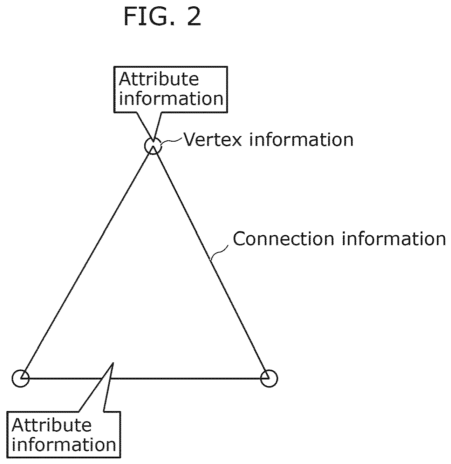

   FIG. 2 is a conceptual diagram illustrating basic elements of the three-dimensional mesh according to the embodiment.
[FIG. 3]

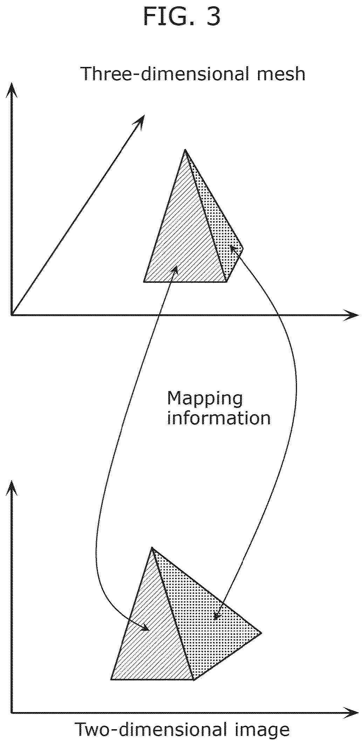

   FIG. 3 is a conceptual diagram illustrating mapping according to the embodiment.
[FIG. 4]

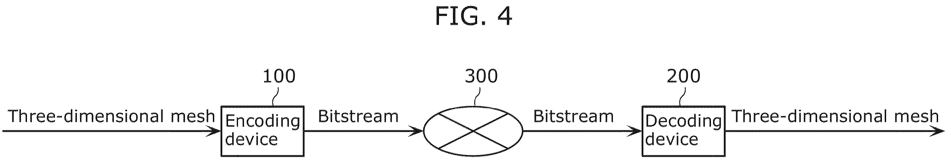

   FIG. 4 is a block diagram illustrating a configuration example of an encoding/decoding system according to the embodiment.
[FIG. 5]

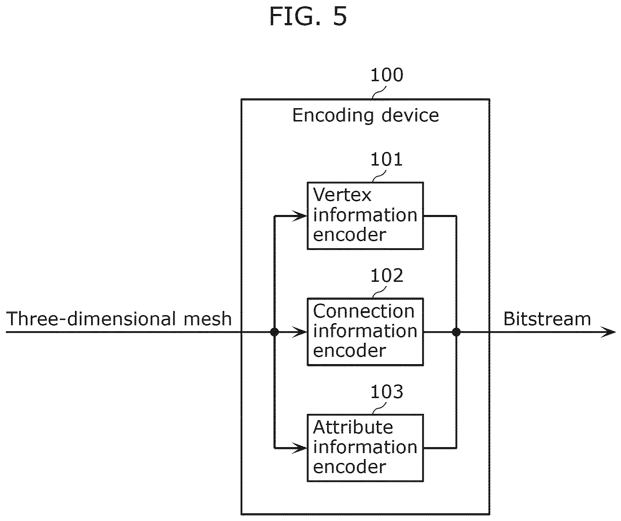

   FIG. 5 is a block diagram illustrating a configuration example of an encoding device according to the embodiment.
[FIG. 6]

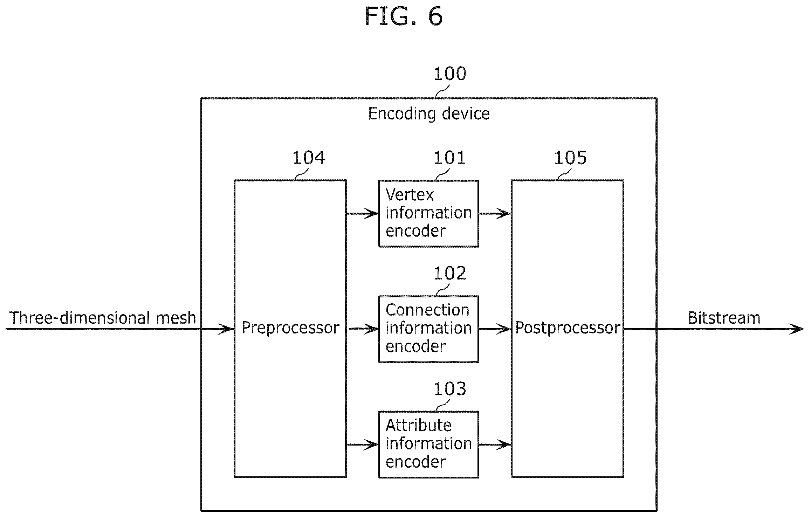

   FIG. 6 is a block diagram illustrating another configuration example of the encoding device according to the embodiment.
[FIG. 7]

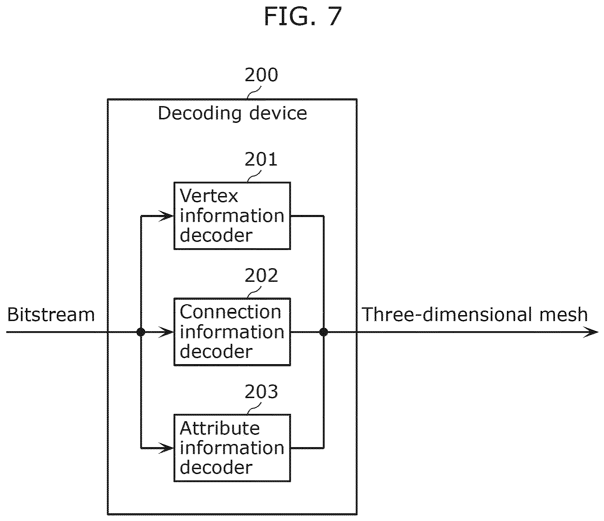

   FIG. 7 is a block diagram illustrating a configuration example of a decoding device according to the embodiment.
[FIG. 8]

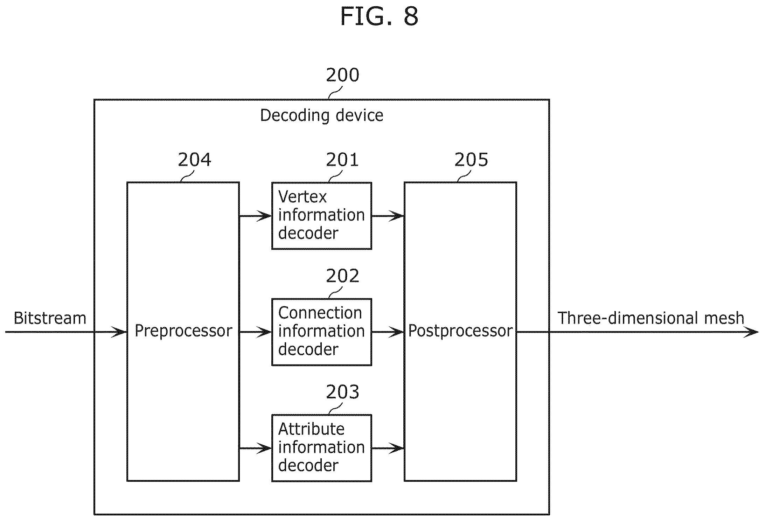

   FIG. 8 is a block diagram illustrating another configuration example of the decoding device according to the embodiment.
[FIG. 9]

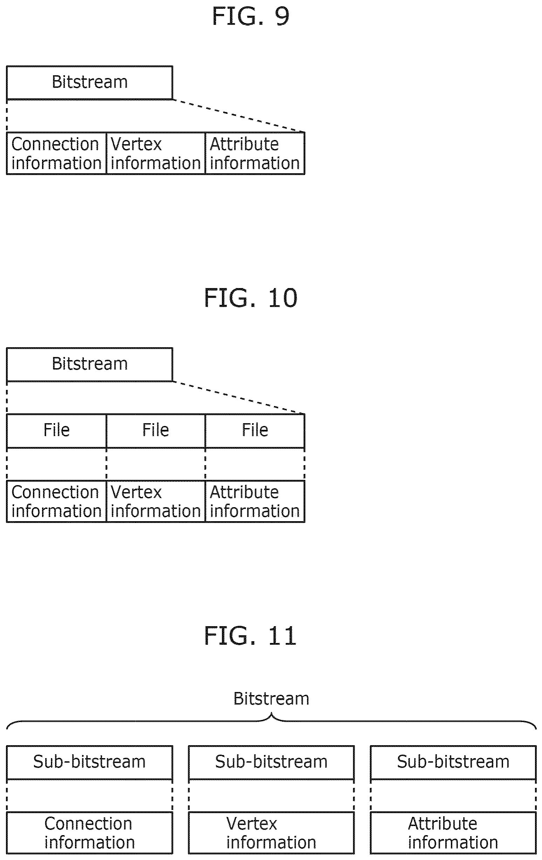

   FIG. 9 is a conceptual diagram illustrating a configuration example of a bitstream according to the embodiment.
[FIG. 10]
   FIG. 10 is a conceptual diagram illustrating another configuration example of the bitstream according to the embodiment.
[FIG. 11]
   FIG. 11 is a conceptual diagram illustrating yet another configuration example of the bitstream according to the embodiment.
[FIG. 12]

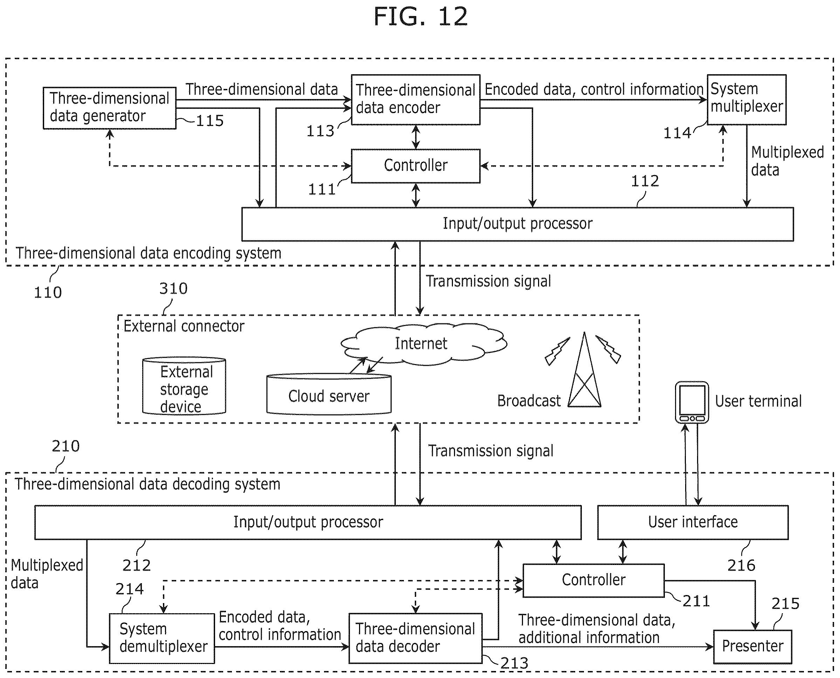

   FIG. 12 is a block diagram illustrating a specific example of the encoding/decoding system according to the embodiment.
[FIG. 13]

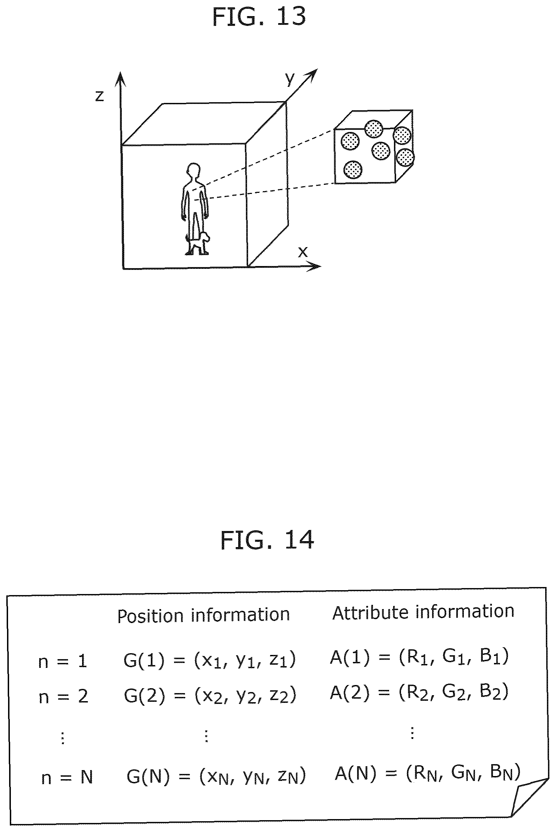

   FIG. 13 is a conceptual diagram illustrating a configuration example of point cloud data according to the embodiment.
[FIG. 14]
   FIG. 14 is a conceptual diagram illustrating a data file example of the point cloud data according to the embodiment.
[FIG. 15]

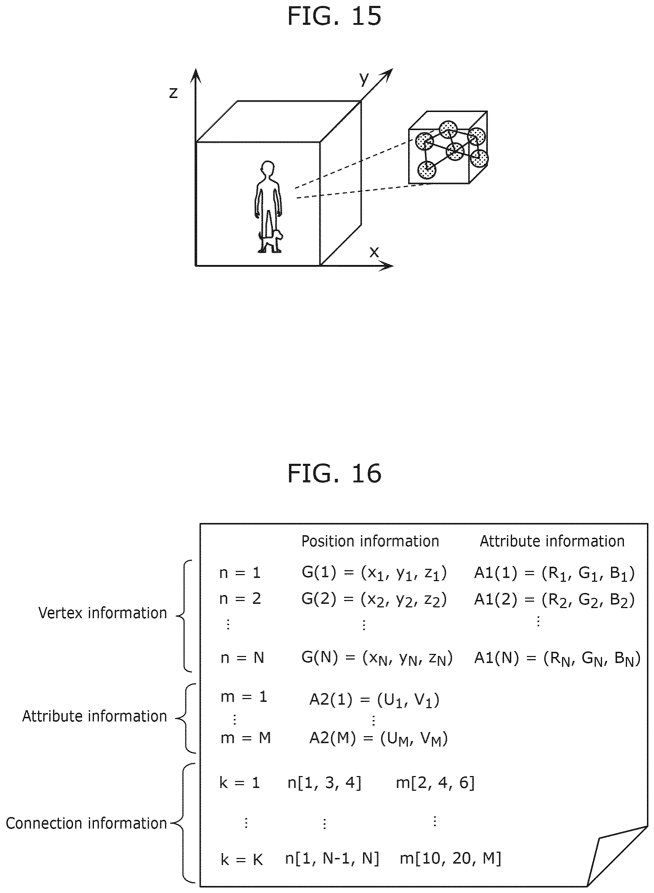

   FIG. 15 is a conceptual diagram illustrating a configuration example of mesh data according to the embodiment.
[FIG. 16]
   FIG. 16 is a conceptual diagram illustrating a data file example of the mesh data according to the embodiment.
[FIG. 17]

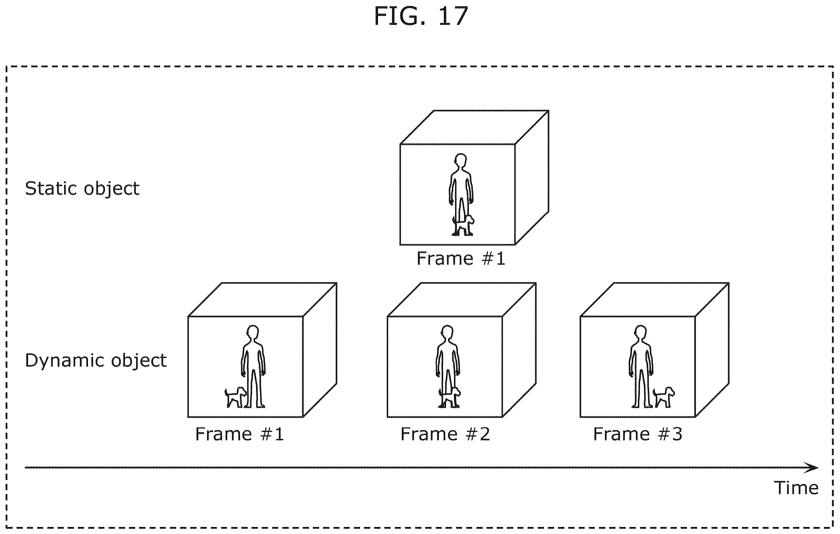

   FIG. 17 is a conceptual diagram illustrating a type of three-dimensional data according to the embodiment.
[FIG. 18]

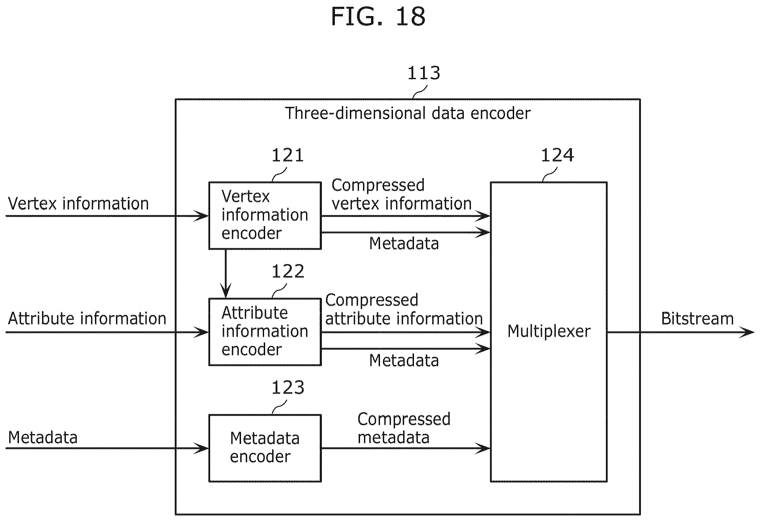

   FIG. 18 is a block diagram illustrating a configuration example of a three-dimensional data encoder according to the embodiment.
[FIG. 19]

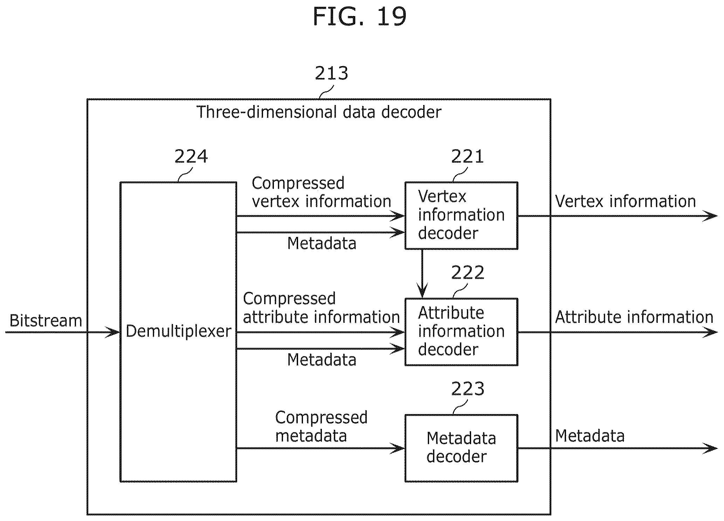

   FIG. 19 is a block diagram illustrating a configuration example of a three-dimensional data decoder according to the embodiment.
[FIG. 20]

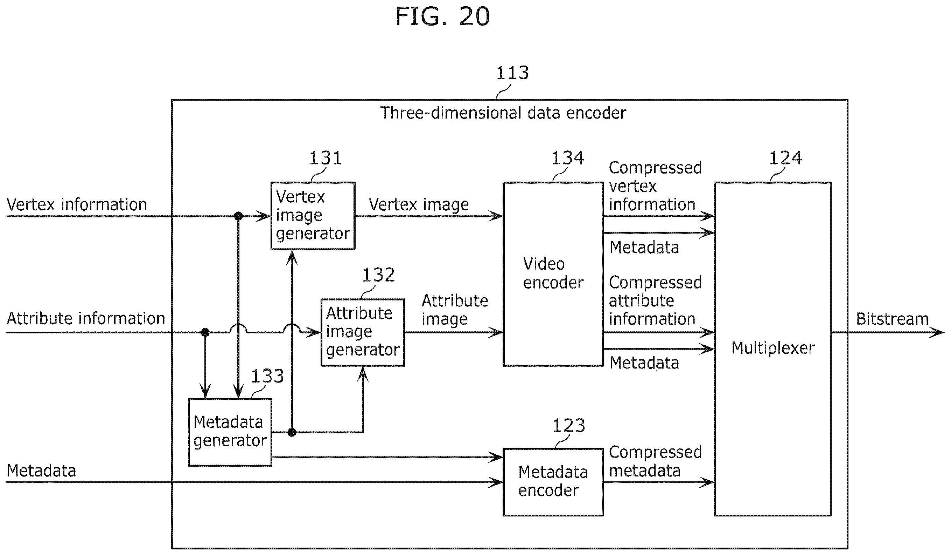

   FIG. 20 is a block diagram illustrating another configuration example of the three-dimensional data encoder according to the embodiment.
[FIG. 21]

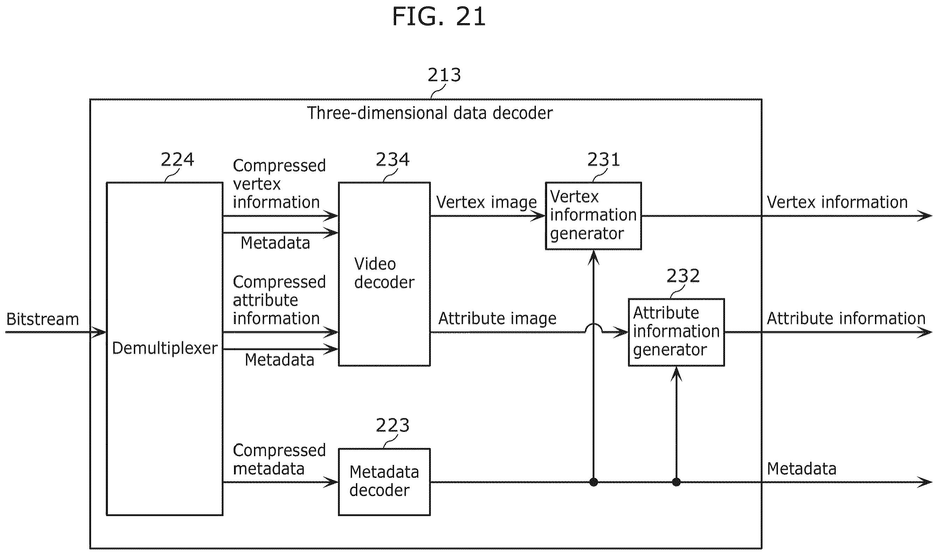

   FIG. 21 is a block diagram illustrating another configuration example of the three-dimensional data decoder according to the embodiment.
[FIG. 22]

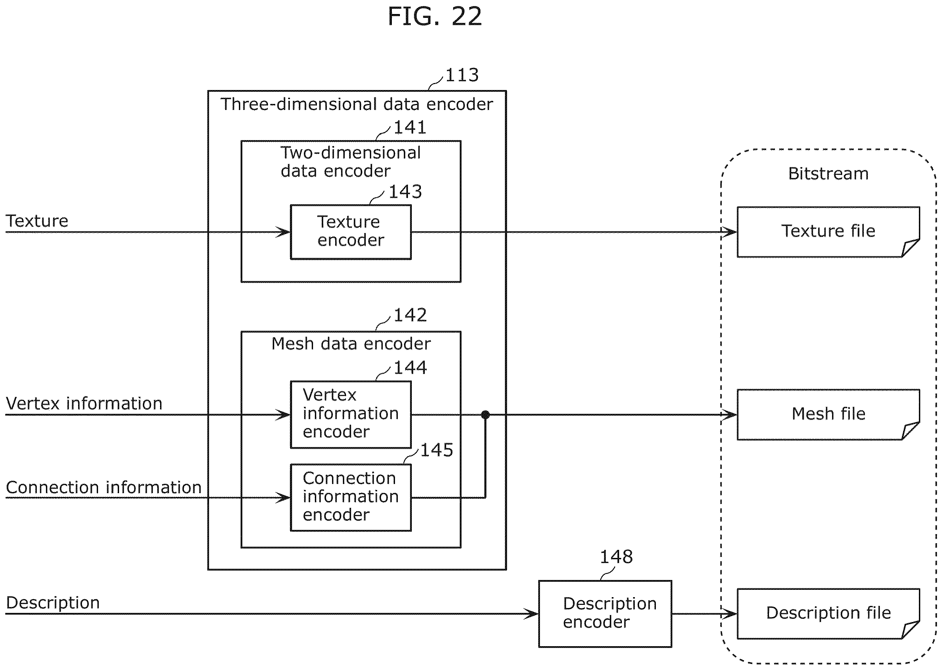

   FIG. 22 is a conceptual diagram illustrating a specific example of encoding processing according to the embodiment.
[FIG. 23]

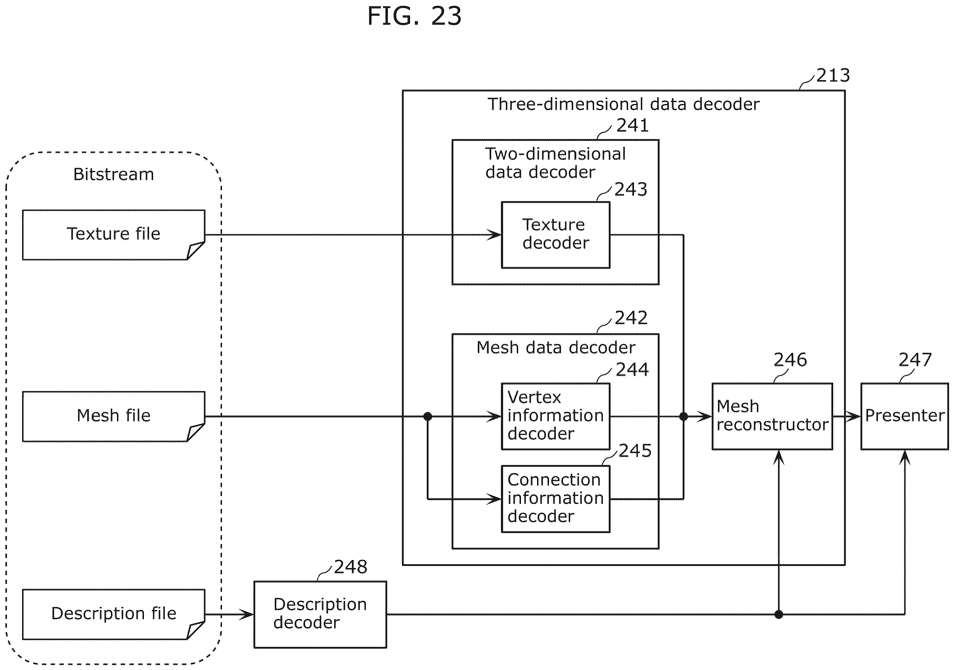

   FIG. 23 is a conceptual diagram illustrating a specific example of decoding processing according to the embodiment.
[FIG. 24]

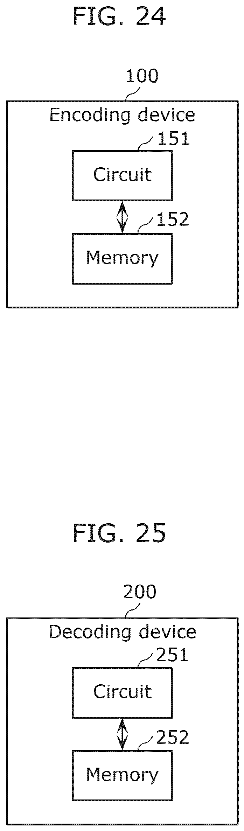

   FIG. 24 is a block diagram illustrating an implementation example of the encoding device according to the embodiment.
[FIG. 25]
   FIG. 25 is a block diagram illustrating an implementation example of the decoding device according to the embodiment.
[FIG. 26]

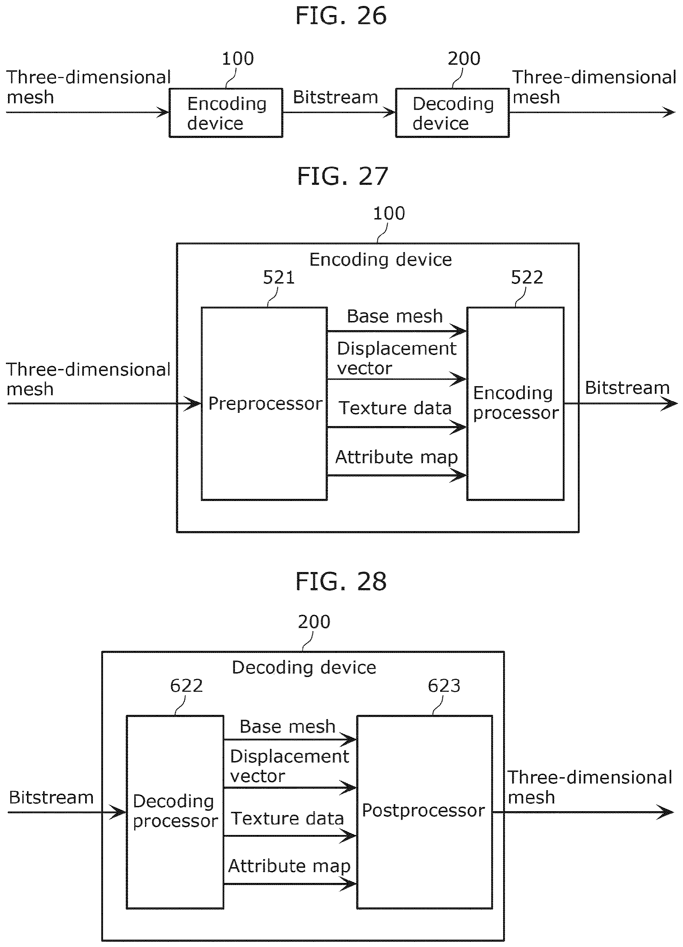

   FIG. 26 is a block diagram illustrating another configuration example of the encoding/decoding system according to the embodiment.
[FIG. 27]
   FIG. 27 is a block diagram illustrating another configuration example of the encoding device according to the embodiment.
[FIG. 28]
   FIG. 28 is a block diagram illustrating another configuration example of the decoding device according to the embodiment.
[FIG. 29]

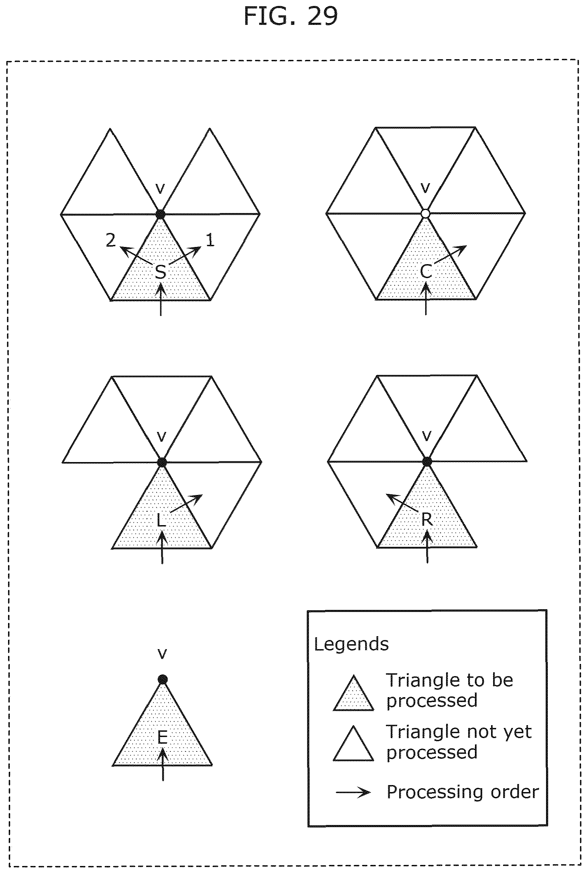

   FIG. 29 is a conceptual diagram illustrating five connection types according to the embodiment.
[FIG. 30]

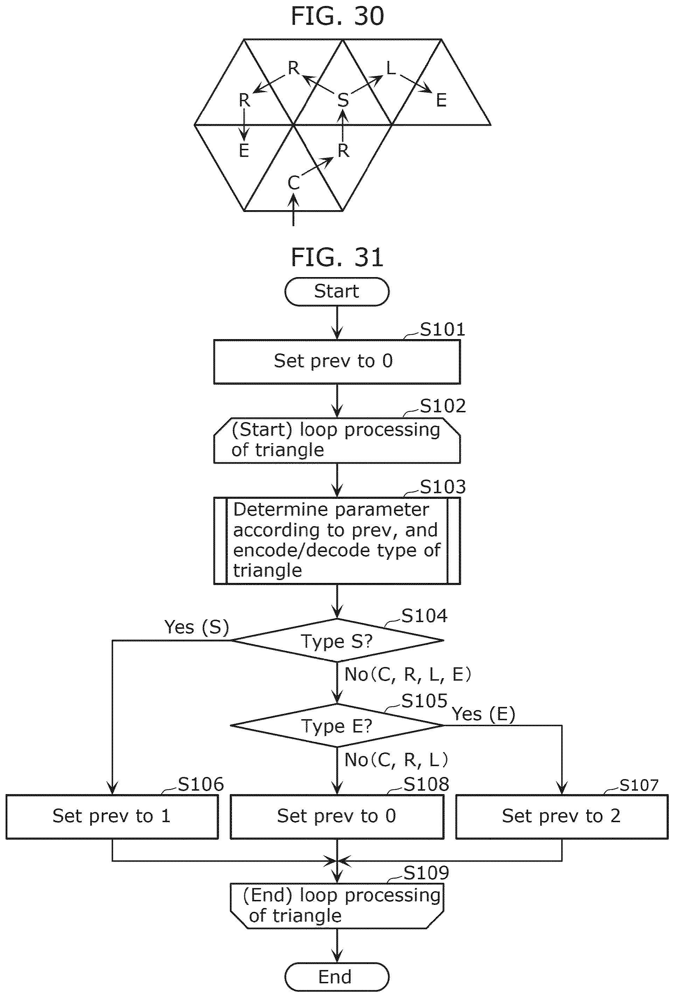

   FIG. 30 is a conceptual diagram illustrating an example of connection types sequentially determined according to the embodiment.
[FIG. 31]
   FIG. 31 is a flowchart illustrating encoding processing and decoding processing for a connection type according to the embodiment.
[FIG. 32]

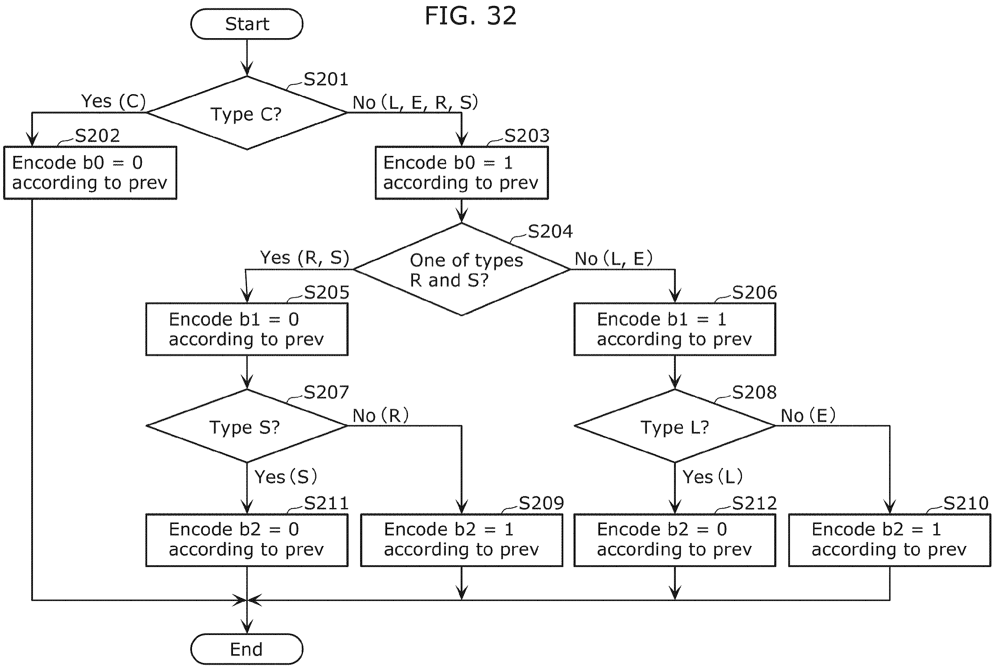

   FIG. 32 is a flowchart illustrating a first specific example of encoding of the connection type according to the embodiment.
[FIG. 33]

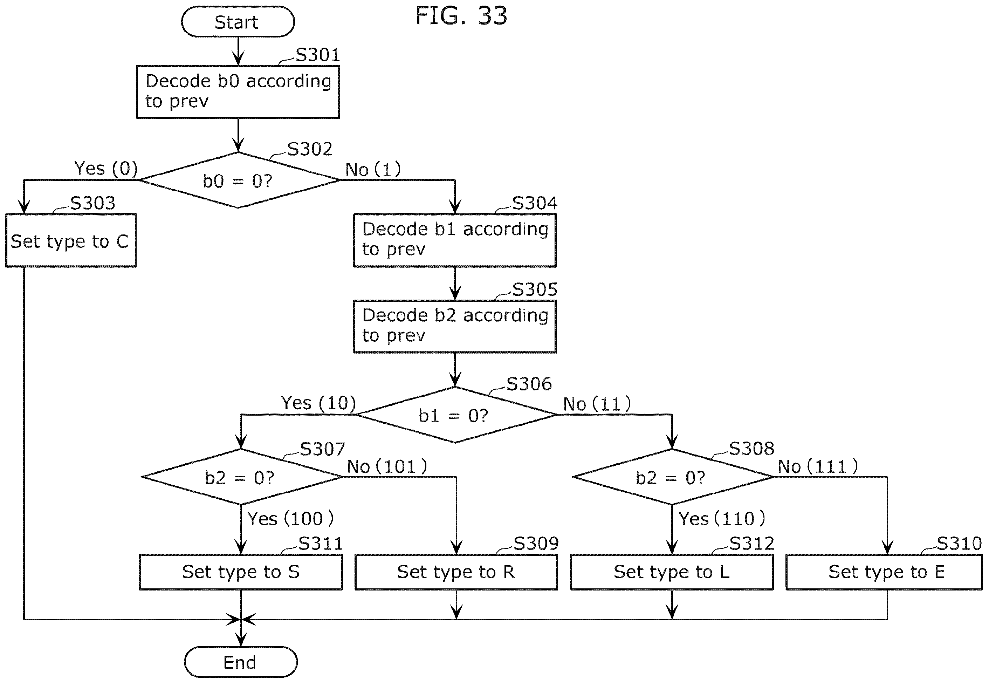

   FIG. 33 is a flowchart illustrating a first specific example of decoding of the connection type according to the embodiment.
[FIG. 34]

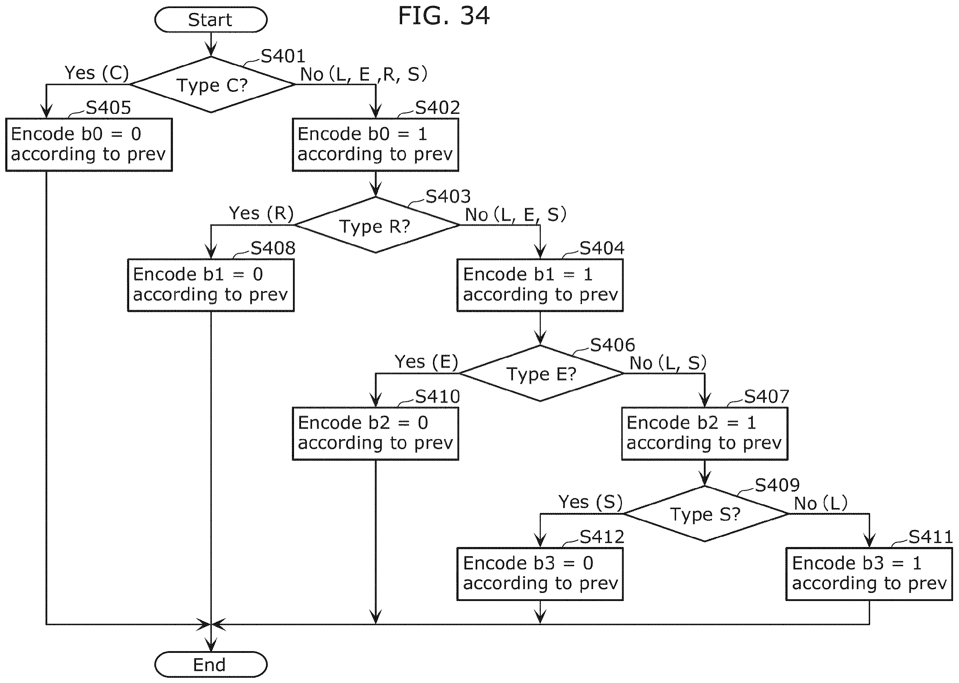

   FIG. 34 is a flowchart illustrating a second specific example of encoding of the connection type according to the embodiment.
[FIG. 35]

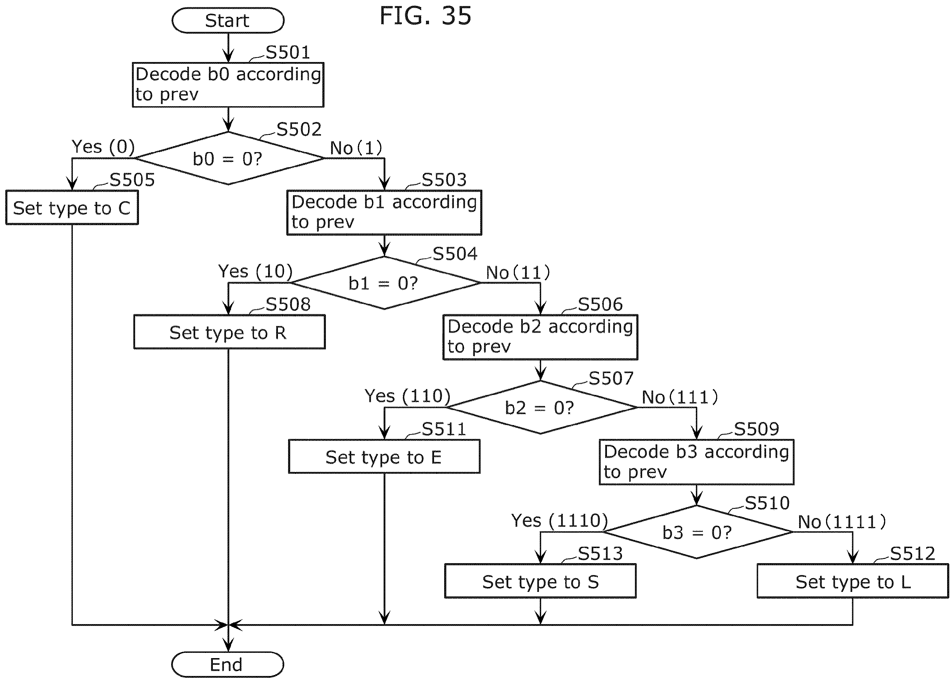

   FIG. 35 is a flowchart illustrating a second specific example of decoding of the connection type according to the embodiment.
[FIG. 36]

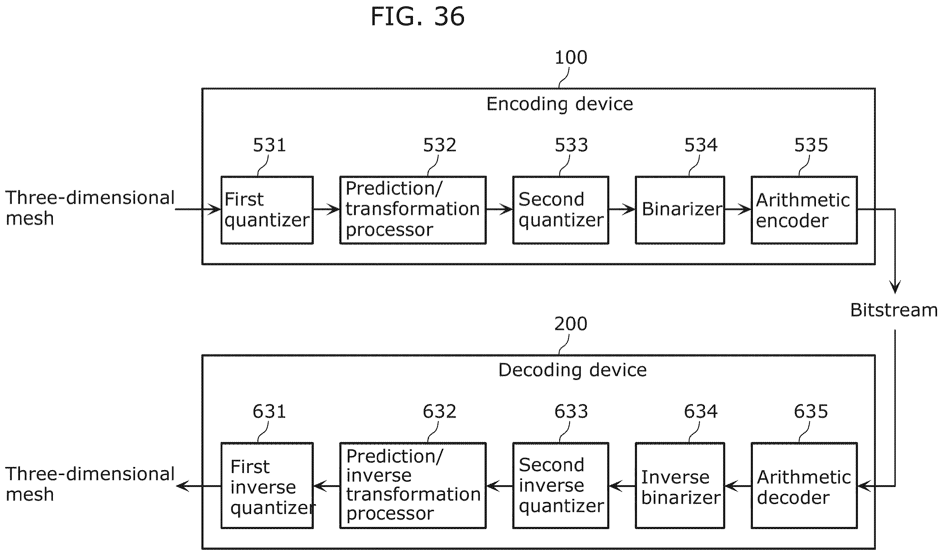

   FIG. 36 is a block diagram illustrating another configuration example of the encoding/decoding system according to the embodiment.
[FIG. 37]

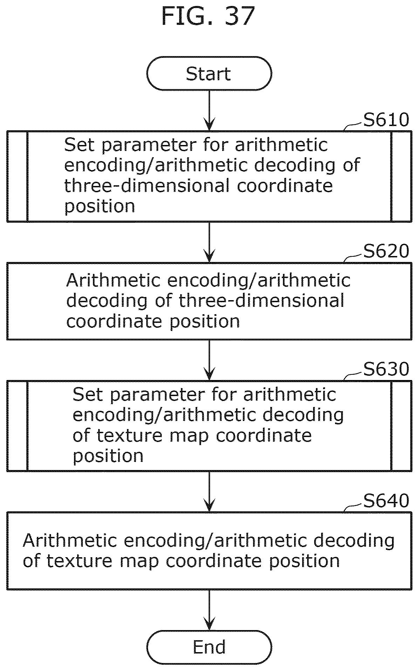

   FIG. 37 is a flowchart illustrating encoding processing and decoding processing for a three-dimensional coordinate position and a texture map coordinate position according to the embodiment.
[FIG. 38]

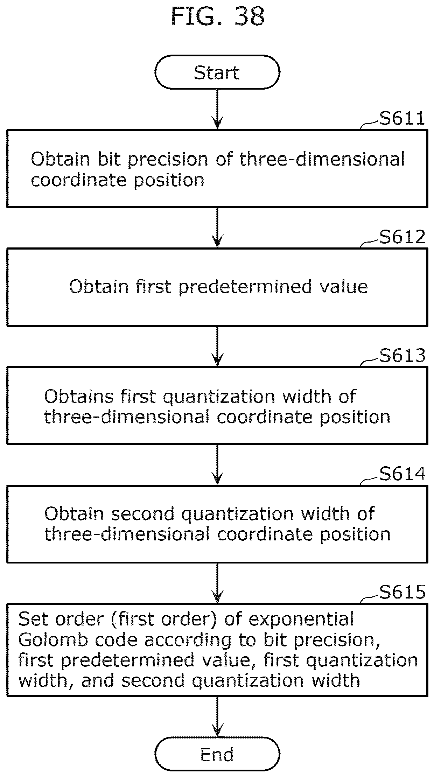

   FIG. 38 is a flowchart illustrating processing for setting a parameter for encoding or decoding of a three-dimensional coordinate position according to the embodiment.
[FIG. 39]

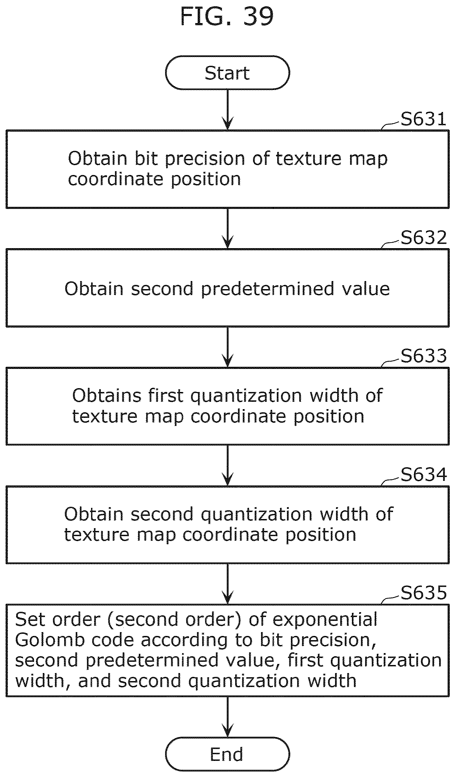

   FIG. 39 is a flowchart illustrating processing for setting a parameter for encoding or decoding of a texture map coordinate position according to the embodiment.
[FIG. 40]

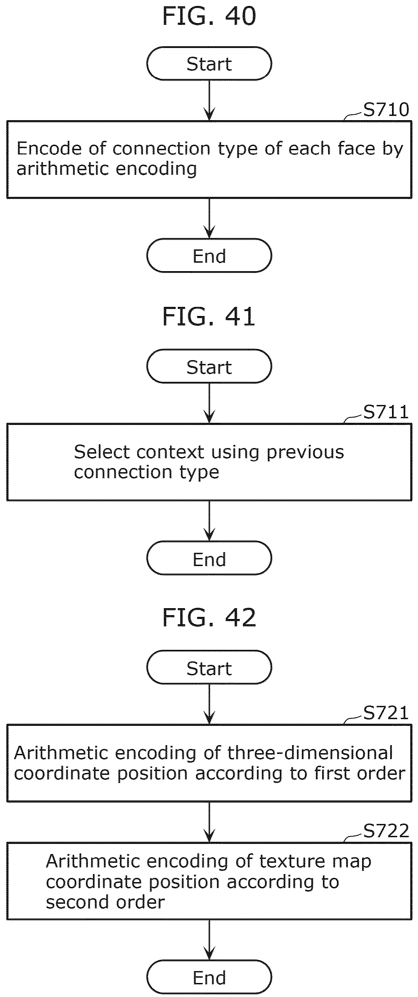

   FIG. 40 is a flowchart illustrating an example of basic encoding processing according to the embodiment.
[FIG. 41]
   FIG. 41 is a flowchart illustrating an example of processing included in the basic encoding processing according to the embodiment.
[FIG. 42]
   FIG. 42 is a flowchart illustrating another example of the basic encoding processing according to the embodiment.
[FIG. 43]

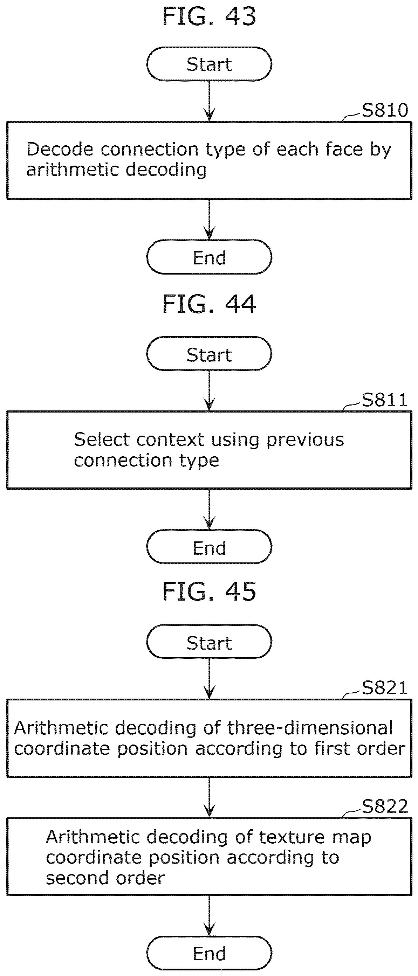

   FIG. 43 is a flowchart illustrating an example of basic decoding processing according to the embodiment.
[FIG. 44]
   FIG. 44 is a flowchart illustrating an example of processing included in the basic decoding processing according to the embodiment.
[FIG. 45]
   FIG. 45 is a flowchart illustrating another example of the basic decoding processing according to the embodiment.
[FIG. 46]

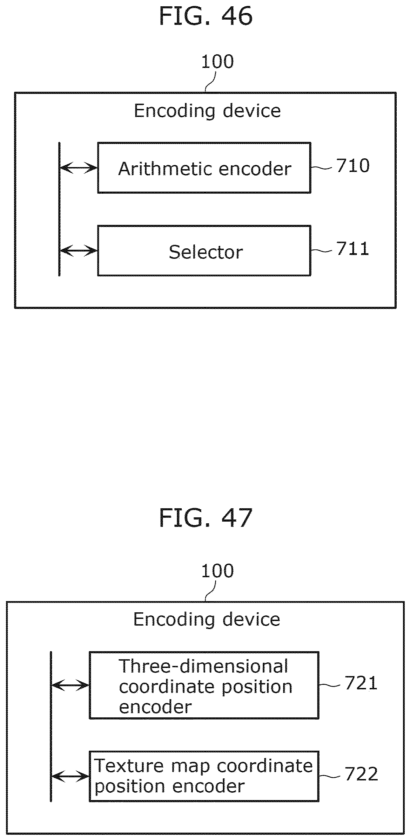

   FIG. 46 is a block diagram illustrating another configuration example of the encoding device according to the embodiment.
[FIG. 47]
   FIG. 47 is a block diagram illustrating another configuration example of the encoding device according to the embodiment.
[FIG. 48]

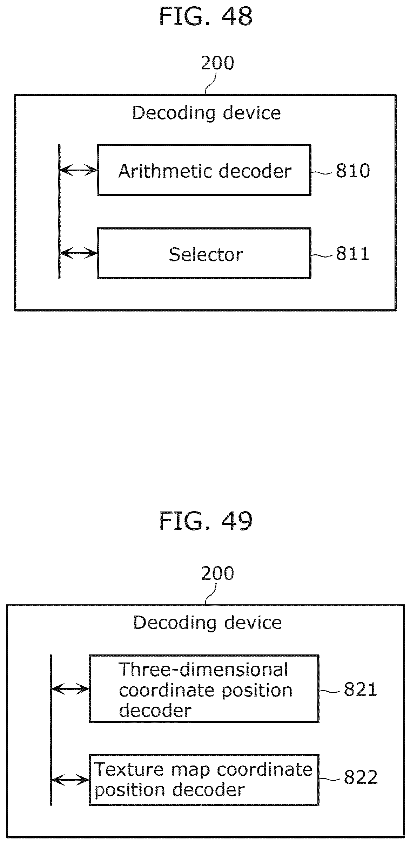

   FIG. 48 is a block diagram illustrating another configuration example of the decoding device according to the embodiment.
[FIG. 49]
   FIG. 49 is a block diagram illustrating another configuration example of the decoding device according to the embodiment.

### [Description of Embodiments]

### <Introduction>

A three-dimensional (3D) mesh is used for a computer graphics video, for example. For example, the computer graphics video is formed by a plurality of frames that temporally differs from each other, and each frame may be represented by a three-dimensional mesh.

In addition, the three-dimensional mesh is formed by vertex information that indicates a position of each of a plurality of vertexes in a three-dimensional space, connection information that indicates a connection relationship between the plurality of vertexes, and attribute information that indicates an attribute of each vertex or each face. Each face is constructed according to a connection relationship between a plurality of vertexes. Such a three-dimensional mesh can represent various computer graphics videos.

Furthermore, for transmission and storage of a three-dimensional mesh, efficient encoding and decoding of a three-dimensional mesh is expected. For efficient encoding and decoding of a three-dimensional mesh, arithmetic encoding and arithmetic decoding may be used. In the arithmetic encoding, for example, information is compressed by using the occurrence probability of values included in the information. Here, the arithmetic encoding may be performed by using the occurrence probability indicated by a context corresponding to a peripheral circumstance or the like of the information to be encoded. In this way, the compressibility of the information of the three-dimensional mesh may be able to be improved.

However, even if the arithmetic encoding and the arithmetic decoding are used, the compressibility is not necessarily improved, depending on the characteristics of the information of the three-dimensional mesh. Specifically, for example, in the context-based arithmetic encoding, it is difficult to improve the compressibility if a context suitable for the characteristics of the information of the three-dimensional mesh is not applied.

In view of this, an encoding device of Example 1 includes: memory; and a circuit accessible to the memory, wherein in operation, the circuit: for each of faces forming a three-dimensional mesh, encodes a connection type regarding a connection relationship between the face to be processed and a face not yet processed, using arithmetic encoding based on a context; and in encoding a current connection type, selects the context to be applied to the arithmetic encoding from among contexts using a previous connection type. The current connection type is the connection type to be encoded. The previous connection type is the connection type encoded before the current connection type.

Accordingly, a context for arithmetic encoding of the current connection type may be able to be selected according to the previous connection type. Therefore, arithmetic encoding of the current connection type that can have a different probability distribution depending on the previous connection type may be able to be performed based on a context selected according to the previous connection type. Therefore, the compressibility may be able to be improved based on the characteristics of the information of the three-dimensional mesh.

Note that a plurality of exemplary connection types regarding the connection relationship between the face to be processed and a face not yet processed may include a type in which the face to be processed is not connected to any face not yet processed (type E described later, for example).

Furthermore, an encoding device of Example 2 may be the encoding device of Example 1, wherein the context is used to determine a probability value for use in the arithmetic encoding, and the circuit performs the arithmetic encoding on the current connection type using the probability value determined based on the context selected using the previous connection type.

Accordingly, a probability value suitable for arithmetic encoding of the current connection type may be able to be specified according to the previous connection type. Therefore, the compressibility may be able to be improved.

Furthermore, an encoding device of Example 3 may be the encoding device of Example 1 or 2, wherein the previous connection type is the connection type encoded immediately before the current connection type.

Accordingly, a context for arithmetic encoding of the current connection type may be able to be selected according to the immediately preceding connection type. Therefore, arithmetic encoding of the current connection type that can have a different probability distribution depending on the immediately preceding connection type may be able to be performed based on a context selected according to the immediately preceding connection type. Therefore, the compressibility may be able to be improved based on the characteristics of the information of the three-dimensional mesh.

Furthermore, an encoding device of Example 4 may be the encoding device of any one of Examples 1 to 3, wherein each of the faces is triangular in shape.

Accordingly, the connection type of each of a plurality of triangles forming a three-dimensional mesh may be able to be encoded. In addition, the compressibility of information that indicates a connection relationship between the plurality of triangles may be able to be improved.

Furthermore, an encoding device of Example 5 may be the encoding device of any one of Examples 1 to 4, wherein the connection type is any one of types including a type indicating a split in which faces not yet processed are split and connected to the face to be processed.

Accordingly, a connection relationship that includes a split at which the face to be processed is connected to two faces not yet processed may be able to be indicated by a connection type. In addition, the compressibility of information that indicates a connection relationship that includes a split may be able to be improved.

Furthermore, an encoding device of Example 6 may be the encoding device of Example 5, wherein the circuit: selects a first context as the context when the previous connection type is the type indicating the split; and selects a second context different from the first context as the context when the previous connection type is a type different from the type indicating the split.

Accordingly, a context may be able to be selected according to whether the previous connection type is a type indicating a split or another type. In addition, the current connection type may be able to be encoded according to the characteristics of the previous connection type, specifically, whether the previous connection type is a type indicating a split or another type. Therefore, the compressibility of information that indicates a connection relationship that includes a split may be able to be improved.

Furthermore, an encoding device of Example 7 may be the encoding device of any one of Examples 1 to 6, wherein the connection type is any one of types specified by Edgebreaker.

Accordingly, a connection relationship defined by Edgebreaker may be able to be indicated by a connection type. In addition, the compressibility of information that indicates a connection relationship defined by Edgebreaker may be able to be improved.

Furthermore, an encoding device of Example 8 may be the encoding device of Example 7, wherein the circuit: selects a first context as the context when the previous connection type is type S specified by the Edgebreaker; and selects a second context different from the first context as the context when the previous connection type is a type different from the type S.

Accordingly, a context may be able to be selected according to whether the previous connection type is type S or another type. In addition, the current connection type may be able to be encoded according to the characteristics of the previous connection type, specifically, whether the previous connection type is type S or another type. Therefore, the compressibility of information that indicates a connection relationship that includes type S defined by Edgebreaker may be able to be improved.

Furthermore, a decoding device of Example 9 includes: memory; and a circuit accessible to the memory, wherein in operation, the circuit: for each of faces forming a three-dimensional mesh, decodes a connection type regarding a connection relationship between the face to be processed and a face not yet processed, using arithmetic decoding based on a context; and in decoding a current connection type, selects the context to be applied to the arithmetic decoding from among contexts using a previous connection type. The current connection type is the connection type to be decoded. The previous connection type is the connection type decoded before the current connection type.

Accordingly, a context for arithmetic decoding of the current connection type may be able to be selected according to the previous connection type. Therefore, arithmetic decoding of the current connection type that can have a different probability distribution depending on the previous connection type may be able to be performed based on a context selected according to the previous connection type. Therefore, the compressibility may be able to be improved based on the characteristics of the information of the three-dimensional mesh.

Note that a plurality of exemplary connection types regarding the connection relationship between the face to be processed and a face not yet processed may include a type in which the face to be processed is not connected to any face not yet processed (type E described later, for example).

Furthermore, a decoding device of Example 10 may be the decoding device of Example 9, wherein the context is used to determine a probability value for use in the arithmetic decoding, and the circuit performs the arithmetic decoding on the current connection type using the probability value determined based on the context selected using the previous connection type.

Accordingly, a probability value suitable for arithmetic decoding of the current connection type may be able to be specified according to the previous connection type. Therefore, the compressibility may be able to be improved.

Furthermore, a decoding device of Example 11 may be the decoding device of Example 9 or 10, wherein the previous connection type is the connection type decoded immediately before the current connection type.

Accordingly, a context for arithmetic decoding of the current connection type may be able to be selected according to the immediately preceding connection type. Therefore, arithmetic decoding of the current connection type that can have a different probability distribution depending on the immediately preceding connection type may be able to be performed based on a context selected according to the immediately preceding connection type. Therefore, the compressibility may be able to be improved based on the characteristics of the information of the three-dimensional mesh.

Furthermore, a decoding device of Example 12 may be the decoding device of any one of Examples 9 to 11, wherein each of the faces is triangular in shape.

Accordingly, the connection type of each of a plurality of triangles forming a three-dimensional mesh may be able to be decoded. In addition, the compressibility of information that indicates a connection relationship between the plurality of triangles may be able to be improved.

Furthermore, a decoding device of Example 13 may be the decoding device of any one of Examples 9 to 12, wherein the connection type is any one of types including a type indicating a split in which faces not yet processed are split and connected to the face to be processed.

Accordingly, a connection relationship that includes a split at which the face to be processed is connected to two faces not yet processed may be able to be indicated by a connection type. In addition, the compressibility of information that indicates a connection relationship that includes a split may be able to be improved.

Furthermore, a decoding device of Example 14 may be the decoding device of Example 13, wherein the circuit: selects a first context as the context when the previous connection type is the type indicating the split; and selects a second context different from the first context as the context when the previous connection type is a type different from the type indicating the split.

Accordingly, a context may be able to be selected according to whether the previous connection type is a type indicating a split or another type. In addition, the current connection type may be able to be decoded according to the characteristics of the previous connection type, specifically, whether the previous connection type is a type indicating a split or another type. Therefore, the compressibility of information that indicates a connection relationship that includes a split may be able to be improved.

Furthermore, a decoding device of Example 15 may be the decoding device of any one of Examples 9 to 14, wherein the connection type is any one of types specified by Edgebreaker.

Accordingly, a connection relationship defined by Edgebreaker may be able to be indicated by a connection type. In addition, the compressibility of information that indicates a connection relationship defined by Edgebreaker may be able to be improved.

Furthermore, a decoding device of Example 16 may be the decoding device of Example 15, wherein the circuit: selects a first context as the context when the previous connection type is type S specified by the Edgebreaker; and selects a second context different from the first context as the context when the previous connection type is a type different from the type S.

Accordingly, a context may be able to be selected according to whether the previous connection type is type S or another type. In addition, the current connection type may be able to be decoded according to the characteristics of the previous connection type, specifically, whether the previous connection type is type S or another type. Therefore, the compressibility of information that indicates a connection relationship that includes type S defined by Edgebreaker may be able to be improved.

Furthermore, an encoding method of Example 17 includes: encoding, for each of faces forming a three-dimensional mesh, a connection type regarding a connection relationship between the face to be processed and a face not yet processed, using arithmetic encoding based on a context; and selecting, in encoding a current connection type, the context to be applied to the arithmetic encoding from among contexts using a previous connection type. The current connection type is the connection type to be encoded. The previous connection type is the connection type encoded before the current connection type.

Accordingly, a context for arithmetic encoding of the current connection type may be able to be selected according to the previous connection type. Therefore, arithmetic encoding of the current connection type that can have a different probability distribution depending on the previous connection type may be able to be performed based on a context selected according to the previous connection type. Therefore, the compressibility may be able to be improved based on the characteristics of the information of the three-dimensional mesh.

Furthermore, a decoding method of Example 18 includes: decoding, for each of faces forming a three-dimensional mesh, a connection type regarding a connection relationship between the face to be processed and a face not yet processed, using arithmetic decoding based on a context; and selecting, in decoding a current connection type, the context to be applied to the arithmetic decoding from among contexts using a previous connection type. The current connection type is the connection type to be decoded. The previous connection type is the connection type decoded before the current connection type.

Accordingly, a context for arithmetic decoding of the current connection type may be able to be selected according to the previous connection type. Therefore, arithmetic decoding of the current connection type that can have a different probability distribution depending on the previous connection type may be able to be performed based on a context selected according to the previous connection type. Therefore, the compressibility may be able to be improved based on the characteristics of the information of the three-dimensional mesh.

Furthermore, the information of the three-dimensional mesh may include a three-dimensional coordinate position of a vertex in a three-dimensional space and a texture map coordinate position of the vertex mapped onto a two-dimensional plane that corresponds to a texture. The three-dimensional coordinate position and the texture map coordinate position may have different characteristics.

Furthermore, an encoding device of example 19 includes a memory and a circuit accessible to the memory, wherein in operation, the circuit performs arithmetic encoding of a three-dimensional coordinate position of a vertex of a face forming a three-dimensional mesh according to a first order obtained by subtracting a first predetermined value from a bit precision of the three-dimensional coordinate position, and performs arithmetic encoding of a texture map coordinate position of the vertex according to a second order obtained by subtracting a second predetermined value from a bit precision of the texture map coordinate position.

Accordingly, arithmetic encoding of a three-dimensional coordinate position may be able to be performed according to a first order suitable for the arithmetic encoding of the three-dimensional coordinate position, and arithmetic encoding of a texture map coordinate position may be able to be performed according to a second order suitable for the arithmetic encoding of the texture map coordinate position. Therefore, arithmetic encoding of a three-dimensional coordinate position may be able to be performed according to the characteristics of the three-dimensional coordinate position, and arithmetic encoding of a texture map coordinate position may be able to be performed according to the characteristics of the texture map coordinate position. Therefore, the compressibility may be able to be improved.

Furthermore, an encoding device of example 20 may be the encoding device of example 19, wherein an exponential Golomb code is used for each of the arithmetic encoding of the three-dimensional coordinate position and the arithmetic encoding of the texture map coordinate position.

Accordingly, the compressibility of information that can be efficiently indicated by the exponential Golomb code may be able to be improved.

Furthermore, an encoding device of example 21 may be the encoding device of example 20, wherein the first order is applied to the exponential Golomb code used for the arithmetic encoding of the three-dimensional coordinate position, and the second order is applied to the exponential Golomb code used for the arithmetic encoding of the texture map coordinate position.

Accordingly, arithmetic encoding of an exponential Golomb code of a first order that can efficiently indicate a three-dimensional coordinate position may be able to be performed, and arithmetic encoding of an exponential Golomb code of a second order that can efficiently indicate a texture map coordinate position may be able to be performed. Therefore, the compressibility of information of a three-dimensional coordinate position and a texture map coordinate position may be able to be improved.

Furthermore, an encoding device of example 22 may be the encoding device of example 21, wherein the first predetermined value is equal to or greater than the second predetermined value.

Accordingly, the first order and the second order may be able to reflect the characteristics that the variance of a plurality of three-dimensional coordinate positions in a three-dimensional space is relatively low, and the variance of a plurality of texture map coordinate positions in a two-dimensional plane is relatively high. Therefore, the compressibility of information of the three-dimensional coordinate position and the texture map coordinate position may be able to be improved.

Furthermore, a decoding device of example 23 includes a memory and a circuit accessible to the memory, wherein in operation, the circuit performs arithmetic decoding of a three-dimensional coordinate position of a vertex of a face forming a three-dimensional mesh according to a first order obtained by subtracting a first predetermined value from a bit precision of the three-dimensional coordinate position, and performs arithmetic decoding of a texture map coordinate position of the vertex according to a second order obtained by subtracting a second predetermined value from a bit precision of the texture map coordinate position.

Accordingly, arithmetic decoding of a three-dimensional coordinate position may be able to be performed according to a first order suitable for the arithmetic decoding of the three-dimensional coordinate position, and arithmetic decoding of a texture map coordinate position may be able to be performed according to a second order suitable for the arithmetic decoding of the texture map coordinate position. Therefore, arithmetic decoding of a three-dimensional coordinate position may be able to be performed according to the characteristics of the three-dimensional coordinate position, and arithmetic decoding of a texture map coordinate position may be able to be performed according to the characteristics of the texture map coordinate position. Therefore, the compressibility may be able to be improved.

Furthermore, a decoding device of example 24 may be the decoding device of example 23, wherein an exponential Golomb code is used for each of the arithmetic decoding of the three-dimensional coordinate position and the arithmetic decoding of the texture map coordinate position.

Accordingly, the compressibility of information that can be efficiently indicated by the exponential Golomb code may be able to be improved.

Furthermore, a decoding device of example 25 may be the decoding device of example 24, wherein the first order is applied to the exponential Golomb code used for the arithmetic decoding of the three-dimensional coordinate position, and the second order is applied to the exponential Golomb code used for the arithmetic decoding of the texture map coordinate position.

Accordingly, arithmetic decoding of an exponential Golomb code of a first order that can efficiently indicate a three-dimensional coordinate position may be able to be performed, and arithmetic decoding of an exponential Golomb code of a second order that can efficiently indicate a texture map coordinate position may be able to be performed. Therefore, the compressibility of information of a three-dimensional coordinate position and a texture map coordinate position may be able to be improved.

Furthermore, a decoding device of example 26 may be the decoding device of example 25, wherein the first predetermined value is equal to or greater than the second predetermined value.

Accordingly, the first order and the second order may be able to reflect the characteristics that the variance of a plurality of three-dimensional coordinate positions in a three-dimensional space is relatively low, and the variance of a plurality of texture map coordinate positions in a two-dimensional plane is relatively high. Therefore, the compressibility of information of the three-dimensional coordinate position and the texture map coordinate position may be able to be improved.

Furthermore, an encoding method of example 27 includes performing arithmetic encoding of a three-dimensional coordinate position of a vertex of a face forming a three-dimensional mesh according to a first order obtained by subtracting a first predetermined value from a bit precision of the three-dimensional coordinate position, and performing arithmetic encoding of a texture map coordinate position of the vertex according to a second order obtained by subtracting a second predetermined value from a bit precision of the texture map coordinate position.

Accordingly, arithmetic encoding of a three-dimensional coordinate position may be able to be performed according to a first order suitable for the arithmetic encoding of the three-dimensional coordinate position, and arithmetic encoding of a texture map coordinate position may be able to be performed according to a second order suitable for the arithmetic encoding of the texture map coordinate position. Therefore, arithmetic encoding of a three-dimensional coordinate position may be able to be performed according to the characteristics of the three-dimensional coordinate position, and arithmetic encoding of a texture map coordinate position may be able to be performed according to the characteristics of the texture map coordinate position. Therefore, the compressibility may be able to be improved.

A decoding method of example 28 includes performing arithmetic decoding of a three-dimensional coordinate position of a vertex of a face forming a three-dimensional mesh according to a first order obtained by subtracting a first predetermined value from a bit precision of the three-dimensional coordinate position, and performing arithmetic decoding of a texture map coordinate position of the vertex according to a second order obtained by subtracting a second predetermined value from a bit precision of the texture map coordinate position.

Accordingly, arithmetic decoding of a three-dimensional coordinate position may be able to be performed according to a first order suitable for the arithmetic decoding of the three-dimensional coordinate position, and arithmetic decoding of a texture map coordinate position may be able to be performed according to a second order suitable for the arithmetic decoding of the texture map coordinate position. Therefore, arithmetic decoding of a three-dimensional coordinate position may be able to be performed according to the characteristics of the three-dimensional coordinate position, and arithmetic decoding of a texture map coordinate position may be able to be performed according to the characteristics of the texture map coordinate position. Therefore, the compressibility may be able to be improved.

Moreover, these general or specific aspects may be implemented using a system, a device, a method, an integrated circuit, a computer program, or a non-transitory computer-readable recording medium such as a CD-ROM, or any combination of systems, devices, methods, integrated circuits, computer programs, and recording media.

### <Expressions and terms>

The following expressions and terms will be used herein.

### (1) Three-dimensional mesh

A three-dimensional mesh is a set of a plurality of faces and indicates, for example, a three-dimensional object. In addition, a three-dimensional mesh is mainly constituted of vertex information, connection information, and attribute information. A three-dimensional mesh may be expressed as a polygon mesh or a mesh. In addition, a three-dimensional mesh may have a temporal change. A three-dimensional mesh may include metadata related to vertex information, connection information, and attribute information or other additional information.

### (2) Vertex information

Vertex information is information indicating a vertex. For example, vertex information indicates a position of a vertex in a three-dimensional space. In addition, a vertex corresponds to a vertex of a face that constitutes a three-dimensional mesh. Vertex information may be expressed as "geometry". In addition, vertex information may also be expressed as position information.

### (3) Connection information

Connection information is information indicating a connection between vertexes. For example, connection information indicates a connection for constructing a face or an edge of a three-dimensional mesh. Connection information may be expressed as "connectivity". In addition, connection information may also be expressed as face information.

### (4) Attribute information

Attribute information is information indicating an attribute of a vertex or a face. For example, attribute information indicates an attribute such as a color, an image, a normal vector, and the like associated with a vertex or a face. Attribute information may be expressed as "texture".

### (5) Face

A face is an element that constitutes a three-dimensional mesh. Specifically, a face is a polygon on a plane in a three-dimensional space. For example, a face can be determined as a triangle in the three-dimensional space.

### (6) Plane

A plane is a two-dimensional plane in a three-dimensional space. For example, a polygon is formed on a plane and a plurality of polygons are formed on a plurality of planes.

### (7) Bitstream

A bitstream corresponds to encoded information. A bitstream can also be expressed as a stream, an encoded bitstream, a compressed bitstream, or an encoded signal.

### (8) Encoding and decoding

The expression "encode" may be replaced with expressions such as store, include, write, describe, signalize, send out, notify, save, or compress and such expressions may be interchangeably used. For example, encoding information may mean including information in a bitstream. In addition, encoding information in a bitstream may mean encoding the information and generating a bitstream that includes the encoded information.

In addition, the expression "decode" may be replaced with expressions such as read, interpret, scan, load, derive, acquire, receive, extract, restore, reconstruct, decompress, or expand and such expressions may be interchangeably used. For example, decoding information may mean acquiring information from a bitstream. In addition, decoding information from a bitstream may mean decoding the bitstream and acquiring information included in the bitstream.

### (9) Ordinal numbers

In the description, an ordinal number such as first, second, or the like may be affixed to a constituent element or the like. Such ordinal numbers may be replaced as necessary. In addition, an ordinal number may be newly affixed to or removed from a constituent element or the like. Furthermore, the ordinal numbers may be affixed to elements in order to identify the elements and may not correspond to any meaningful order.

### <Three-dimensional mesh>

FIG. 1 is a conceptual diagram illustrating a three-dimensional mesh according to the present embodiment. The three-dimensional mesh is constituted of a plurality of faces. For example, each face is a triangle. Vertexes of the triangles are determined in a three-dimensional space. In addition, a three-dimensional mesh indicates a three-dimensional object. Each face may have a color or an image.

FIG. 2 is a conceptual diagram illustrating basic elements of a three-dimensional mesh according to the present embodiment. The three-dimensional mesh is constituted of vertex information, connection information, and attribute information. Vertex information indicates a position of a vertex of a face in a three-dimensional space. Connection information indicates a connection between vertexes. A face can be identified based on vertex information and connection information. In other words, an uncolored three-dimensional object is formed in a three-dimensional space based on vertex information and connection information.

Attribute information may be associated with a vertex or associated with a face. Attribute information associated with a vertex may be expressed as "attribute per point". Attribute information associated with a vertex may indicate an attribute of the vertex itself or indicate an attribute of a face connected to the vertex.

For example, a color may be associated with a vertex as attribute information. The color associated with the vertex may be the color of the vertex or the color of a face connected to the vertex. The color of the face may be an average of a plurality of colors associated with a plurality of vertexes of the face. In addition, a normal vector may be associated with a vertex or a face as attribute information. Such a normal vector can express a front and a rear of a face.

In addition, a two-dimensional image may be associated with a face as attribute information. The two-dimensional image associated with a face is also expressed as a texture image or an "attribute map". In addition, information indicating mapping between a face and a two-dimensional image may be associated with the face as attribute information. Such information indicating mapping may be expressed as mapping information, vertex information of a texture image, or an "attribute UV coordinate".

Furthermore, information on a color, an image, a moving image, and the like to be used as attribute information may be expressed as "parametric space".

A texture is reflected in a three-dimensional object based on such attribute information. In other words, a colored three-dimensional object is formed in a three-dimensional space based on vertex information, connection information, and attribute information.

Note that while attribute information is associated with a vertex or a face in the description given above, alternatively, attribute information may be associated with an edge.

FIG. 3 is a conceptual diagram illustrating mapping according to the present embodiment. For example, a region of a two-dimensional image on a two-dimensional plane can be mapped to a face of a three-dimensional mesh in a three-dimensional space. Specifically, coordinate information of a region in the two-dimensional image is associated with a face of the three-dimensional mesh. Accordingly, an image of the mapped region in the two-dimensional image is reflected in the face of the three-dimensional mesh.

The use of mapping enables a two-dimensional image to be used as attribute information to be separated from the three-dimensional mesh. For example, in encoding of the three-dimensional mesh, the two-dimensional image may be encoded based on an image encoding system or a video encoding system.

### <System configuration>

FIG. 4 is a block diagram illustrating a configuration example of an encoding/decoding system according to the present embodiment. In FIG. 4, the encoding/decoding system includes encoding device 100 and decoding device 200.

For example, encoding device 100 acquires a three-dimensional mesh and encodes the three-dimensional mesh into a bitstream. In addition, encoding device 100 outputs the bitstream to network 300. For example, the bitstream includes an encoded three-dimensional mesh and control information for decoding the encoded three-dimensional mesh. Encoding of the three-dimensional mesh causes information of the three-dimensional mesh to be compressed.

Network 300 transmits the bitstream from encoding device 100 to decoding device 200. Network 300 may be the Internet, a wide area network (WAN), a local area network (LAN), or a combination thereof. Network 300 is not necessarily limited to two-way communication and may be a unidirectional communication network for terrestrial digital broadcasting, satellite broadcasting, or the like.

In addition, network 300 may be replaced with a recording medium such as a DVD (digital versatile disc), a BD (Blu-Ray Disc (registered trademark)), or the like.

Decoding device 200 acquires a bitstream and decodes a three-dimensional mesh from the bitstream. Decoding of the three-dimensional mesh causes information of the three-dimensional mesh to be expanded. For example, decoding device 200 decodes a three-dimensional mesh according to a decoding method corresponding to an encoding method used by encoding device 100 to encode the three-dimensional mesh. In other words, encoding device 100 and decoding device 200 perform encoding and decoding according to an encoding method and a decoding method which correspond to each other.

Note that the three-dimensional mesh before encoding can also be expressed as an original three-dimensional mesh. In addition, the three-dimensional mesh after decoding is also expressed as a reconstructed three-dimensional mesh.

### <Encoding device>

FIG. 5 is a block diagram illustrating a configuration example of encoding device 100 according to the present embodiment. For example, encoding device 100 includes vertex information encoder 101, connection information encoder 102, and attribute information encoder 103.

Vertex information encoder 101 is an electric circuit which encodes vertex information. For example, vertex information encoder 101 encodes vertex information into a bitstream according to a format defined with respect to the vertex information.

Connection information encoder 102 is an electric circuit which encodes connection information. For example, connection information encoder 102 encodes connection information into a bitstream according to a format defined with respect to the connection information.

Attribute information encoder 103 is an electric circuit which encodes attribute information. For example, attribute information encoder 103 encodes attribute information into a bitstream according to a format defined with respect to the attribute information.

Variable-length coding or fixed length coding may be used for encoding vertex information, connection information, and attribute information. The variable-length coding may accommodate Huffman coding, context-adaptive binary arithmetic coding (CABAC), or the like.

Vertex information encoder 101, connection information encoder 102, and attribute information encoder 103 may be integrated. Alternatively, each of vertex information encoder 101, connection information encoder 102, and attribute information encoder 103 may be more finely segmentalized into a plurality of constituent elements.

FIG. 6 is a block diagram illustrating another configuration example of encoding device 100 according to the present embodiment. For example, in addition to the components illustrated in FIG. 5, encoding device 100 includes preprocessor 104 and postprocessor 105.

Preprocessor 104 is an electric circuit which performs processing before encoding of vertex information, connection information, and attribute information. For example, preprocessor 104 may perform transformation processing, demultiplexing, multiplexing, or the like with respect to a three-dimensional mesh before encoding. More specifically, for example, preprocessor 104 may demultiplex vertex information, connection information, and attribute information from the three-dimensional mesh before encoding.

Postprocessor 105 is an electric circuit which performs processing after the encoding of vertex information, connection information, and attribute information. For example, postprocessor 105 may perform transformation processing, demultiplexing, multiplexing, or the like with respect to vertex information, connection information, and attribute information after encoding. More specifically, for example, postprocessor 105 may multiplex vertex information, connection information, and attribute information after encoding into a bitstream. In addition, for example, postprocessor 105 may further perform variable-length coding with respect to vertex information, connection information, and attribute information after the encoding.

### <Decoding device>

FIG. 7 is a block diagram illustrating a configuration example of decoding device 200 according to the present embodiment. For example, decoding device 200 includes vertex information decoder 201, connection information decoder 202, and attribute information decoder 203.

Vertex information decoder 201 is an electric circuit which decodes vertex information. For example, vertex information decoder 201 decodes vertex information from a bitstream according to a format defined with respect to the vertex information.

Connection information decoder 202 is an electric circuit which decodes connection information. For example, connection information decoder 202 decodes connection information from a bitstream according to a format defined with respect to the connection information.

Attribute information decoder 203 is an electric circuit which decodes attribute information. For example, attribute information decoder 203 decodes attribute information from a bitstream according to a format defined with respect to the attribute information.

Variable-length decoding or fixed length decoding may be used for decoding vertex information, connection information, and attribute information. The variable-length decoding may accommodate Huffman coding, context-adaptive binary arithmetic coding (CABAC), or the like.

Vertex information decoder 201, connection information decoder 202, and attribute information decoder 203 may be integrated. Alternatively, each of vertex information decoder 201, connection information decoder 202, and attribute information decoder 203 may be more finely segmentalized into a plurality of constituent elements.

FIG. 8 is a block diagram illustrating another configuration example of decoding device 200 according to the present embodiment. For example, in addition to the components illustrated in FIG. 7, decoding device 200 includes preprocessor 204 and postprocessor 205.

Preprocessor 204 is an electric circuit which performs processing before decoding of vertex information, connection information, and attribute information. For example, preprocessor 204 may perform transformation processing, demultiplexing, multiplexing, or the like with respect to a bitstream before decoding of vertex information, connection information, and attribute information.

More specifically, for example, preprocessor 204 may demultiplex, from a bitstream, a sub-bitstream corresponding to vertex information, a sub-bitstream corresponding to connection information, and a sub-bitstream corresponding to attribute information. In addition, for example, preprocessor 204 may perform variable-length decoding with respect to the bitstream in advance before decoding of vertex information, connection information, and attribute information.

Postprocessor 205 is an electric circuit which performs processing after the decoding of vertex information, connection information, and attribute information. For example, postprocessor 205 may perform transformation processing, demultiplexing, multiplexing, or the like with respect to vertex information, connection information, and attribute information after decoding. More specifically, for example, postprocessor 205 may multiplex vertex information, connection information, and attribute information after decoding into a three-dimensional mesh.

### <Bitstream>

Vertex information, connection information, and attribute information are encoded and stored in a bitstream. A relationship between these pieces of information and the bitstream will be described below.

FIG. 9 is a conceptual diagram illustrating a configuration example of a bitstream according to the present embodiment. In this example, connection information, vertex information, and attribute information are integrated in the bitstream. For example, connection information, vertex information, and attribute information may be included in one file.

In addition, a plurality of portions of the pieces of information may be sequentially stored such as a first portion of connection information, a first portion of vertex information, a first portion of attribute information, a second portion of connection information, a second portion of vertex information, a second portion of attribute information, ... The plurality of portions may correspond to a plurality of temporally different portions, correspond to a plurality of spatially different portions, or correspond to a plurality of different faces.

Furthermore, an order of storage of connection information, vertex information, and attribute information is not limited to the example described above and an order of storage that differs from the above may be used.

FIG. 10 is a conceptual diagram illustrating another configuration example of a bitstream according to the present embodiment. In the example, a plurality of files are included in a bitstream and connection information, vertex information, and attribute information are respectively stored in different files. While a file including connection information, a file including vertex information, and a file including attribute information are illustrated here, storage formats are not limited to this example. For example, two types of information among connection information, vertex information, and attribute information may be included in one file and the one remaining type of information may be included in another file.

Alternatively, the pieces of information can be stored by being divided into a larger number of files. For example, a plurality of portions of connection information may be stored in a plurality of files, a plurality of portions of vertex information may be stored in a plurality of files, and a plurality of portions of attribute information may be stored in a plurality of files. The plurality of portions may correspond to a plurality of temporally different portions, correspond to a plurality of spatially different portions, or correspond to a plurality of different faces.

Furthermore, an order of storage of connection information, vertex information, and attribute information is not limited to the example described above and an order of storage that differs from the above may be used.

FIG. 11 is a conceptual diagram illustrating another configuration example of a bitstream according to the present embodiment. In the example, a bitstream is constituted of a plurality of separable sub-bitstreams and connection information, vertex information, and attribute information are respectively stored in different sub-bitstreams.

While a sub-bitstream including connection information, a sub-bitstream including vertex information, and a sub-bitstream including attribute information are illustrated here, storage formats are not limited to this example.

For example, two types of information among connection information, vertex information, and attribute information may be included in one sub-bitstream and the one remaining type of information may be included in another sub-bitstream. Specifically, attribute information such as a two-dimensional image may be stored in a sub-bitstream conforming to an image coding system separately from a sub-bitstream of connection information and vertex information.

In addition, each sub-bitstream may include a plurality of files. Furthermore, a plurality of portions of connection information may be stored in a plurality of files, a plurality of portions of vertex information may be stored in a plurality of files, and a plurality of portions of attribute information may be stored in a plurality of files.

Furthermore, an order of storage of connection information, vertex information, and attribute information is not limited to the example illustrated in FIG. 9, FIG. 10, and FIG. 11, and an order of storage that differs from this example may be used. For example, vertex information, connection information, and attribute information may be stored in a bitstream in this order. Alternatively, in an order other than this order, e.g., in any of orders: connection information, attribute information, and vertex information; vertex information, attribute information, and connection information; attribute information, connection information, and vertex information; and attribute information, vertex information, and connection information, these pieces of information may be stored in a bitstream.

Furthermore, each of connection information, vertex information, and attribute information may be divided into a plurality of data items, and the plurality of data items may be stored in a bitstream in a periodic order or in a random order.

### <Specific example>

FIG. 12 is a block diagram illustrating a specific example of the encoding/decoding system according to the present embodiment. In FIG. 12, the encoding/decoding system includes three-dimensional data encoding system 110, three-dimensional data decoding system 210, and external connector 310.

Three-dimensional data encoding system 110 includes controller 111, input/output processor 112, three-dimensional data encoder 113, three-dimensional data generator 115, and system multiplexer 114. Three-dimensional data decoding system 210 includes controller 211, input/output processor 212, three-dimensional data decoder 213, system demultiplexer 214, presenter 215, and user interface 216.

In three-dimensional data encoding system 110, sensor data is input from a sensor terminal to three-dimensional data generator 115. Three-dimensional data generator 115 generates three-dimensional data that is point cloud data, mesh data, or the like from the sensor data and inputs the three-dimensional data to three-dimensional data encoder 113.

For example, three-dimensional data generator 115 generates vertex information and generates connection information and attribute information which correspond to the vertex information. Three-dimensional data generator 115 may process vertex information when generating connection information and attribute information. For example, three-dimensional data generator 115 may reduce a data amount by deleting overlapping vertexes or transform vertex information (position shift, rotation, normalization, or the like). In addition, three-dimensional data generator 115 may render attribute information.

While three-dimensional data generator 115 is a constituent element of three-dimensional data encoding system 110 in FIG. 12, three-dimensional data generator 115 may be disposed on the outside independent of three-dimensional data encoding system 110.

For example, a sensor terminal that provides sensor data for generating three-dimensional data may be a mobile object such as an automobile, a flying object such as an airplane, a mobile terminal, a camera, or the like. Alternatively, a range sensor such as LIDAR, a millimeter-wave radar, an infrared sensor, or a range finder, a stereo camera, a combination of a plurality of monocular cameras, or the like may be used as the sensor terminal.

The sensor data may be a distance (position) of an object, a monocular camera image, a stereo camera image, a color, a reflectance, an attitude or an orientation of a sensor, a gyro, a sensing position (GPS information or elevation), a velocity, an acceleration, a time of day of sensing, air temperature, air pressure, humidity, magnetism, or the like.

Three-dimensional data encoder 113 corresponds to encoding device 100 illustrated in FIG. 5 and the like. For example, three-dimensional data encoder 113 encodes three-dimensional data and generates encoded data. In addition, three-dimensional data encoder 113 generates control information when encoding the three-dimensional data. Furthermore, three-dimensional data encoder 113 inputs the encoded data to system multiplexer 114 together with the control information.

The encoding system of three-dimensional data may be an encoding system using geometry or an encoding system using a video codec. In this case, an encoding system using geometry may also be expressed as a geometry-based encoding system. An encoding system using a video codec may also be expressed as a video-based encoding system.

System multiplexer 114 multiplexes encoded data and control information input from three-dimensional data encoder 113 and generates multiplexed data using a prescribed multiplexing system. System multiplexer 114 may multiplex other media such as video, audio, subtitles, application data, or document files, reference time information, or the like together with the encoded data and control information of three-dimensional data. Furthermore, system multiplexer 114 may multiplex attribute information related to sensor data or three-dimensional data.

For example, multiplexed data has a file format for accumulation, a packet format for transmission, or the like. ISOBMFF or an ISOBMFF-based system may be used as an accumulation system or a transmission system. Alternatively, MPEG-DASH, MMT, MPEG-2 TS Systems, RTP, or the like may be used.

In addition, multiplexed data is output as a transmission signal by input/output processor 112 to external connector 310. The multiplexed data may be transmitted as a transmission signal in a wired manner or in a wireless manner. Alternatively, the multiplexed data is accumulated in an internal memory or a storage device. The multiplexed data may be transmitted via the Internet to a cloud server or stored in an external storage device.

For example, the transmission or accumulation of the multiplexed data is performed by a method in accordance with a medium for transmission or accumulation such as broadcasting or communication. As a communication protocol, http, ftp, TCP, UDP, IP, or a combination thereof may be used. In addition, a pull-type communication scheme may be used or a push-type communication scheme may be used.

Ethernet (registered trademark), USB, RS-232C, HDMI (registered trademark), a coaxial cable, or the like may be used for wired transmission. In addition, 3GPP (registered trademark), 3G/4G/5G as specified by IEEE, a wireless LAN, Bluetooth, or a millimeter-wave may be used for wireless transmission. Furthermore, for example, DVB-T2, DVB-S2, DVB-C2, ATSC 3.0, ISDB-S3, or the like may be used as a broadcasting system.

Note that sensor data may be input to three-dimensional data generator 115 or system multiplexer 114. In addition, three-dimensional data or encoded data may be output as-is as a transmission signal to external connector 310 via input/output processor 112. The transmission signal output from three-dimensional data encoding system 110 is input to three-dimensional data decoding system 210 via external connector 310.

In addition, each operation of three-dimensional data encoding system 110 may be controlled by controller 111 which executes application programs.

In three-dimensional data decoding system 210, a transmission signal is input to input/output processor 212. Input/output processor 212 decodes multiplexed data having a file format or a packet format from the transmission signal and inputs the multiplexed data to system demultiplexer 214. System demultiplexer 214 acquires encoded data and control information from the multiplexed data and inputs the encoded data and the control information to three-dimensional data decoder 213. System demultiplexer 214 may extract other media, reference time information, or the like from the multiplexed data.

Three-dimensional data decoder 213 corresponds to decoding device 200 illustrated in FIG. 7 and the like. For example, three-dimensional data decoder 213 decodes three-dimensional data from the encoded data based on an encoding system specified in advance. Subsequently, the three-dimensional data is presented to a user by presenter 215.

In addition, additional information such as sensor data may be input to presenter 215. Presenter 215 may present three-dimensional data based on the additional information. In addition, an instruction by the user may be input to user interface 216 from a user terminal. Furthermore, presenter 215 may present three-dimensional data based on the input instruction.

Note that input/output processor 212 may acquire three-dimensional data and encoded data from external connector 310.

In addition, each operation of three-dimensional data decoding system 210 may be controlled by controller 211 which executes application programs.

FIG. 13 is a conceptual diagram illustrating a configuration example of point cloud data according to the present embodiment. Point cloud data refers to data of a point cloud that indicates a three-dimensional object.

Specifically, a point cloud is constituted of a plurality of points and has position information which indicates a three-dimensional coordinate position of each point and attribute information which indicates an attribute of each point. The position information is also expressed as geometry.

For example, a type of attribute information may be a color, a reflectance, or the like. Attribute information related to one type may be associated with one point, attribute information related to a plurality of different types may be associated with one point, or attribute information having a plurality of values with respect to a same type may be associated with one point.

FIG. 14 is a conceptual diagram illustrating a data file example of the point cloud data according to the present embodiment. The example is an example of a case where items of position information and items of attribute information have a one-to-one correspondence and the example indicates position information and attribute information of N-number of points which constitute the point cloud data. In this example, position information is information indicating a three-dimensional coordinate position by three axes of x, y, and z and attribute information is information indicating a color by RGB. As a representative data file of point cloud data, a PLY file or the like can be used.

FIG. 15 is a conceptual diagram illustrating a configuration example of mesh data according to the present embodiment. Mesh data is data used in CG (computer graphics) or the like and is data of a three-dimensional mesh which represents a three-dimensional shape of an object by a plurality of faces. Each face is also expressed as a polygon and has a polygonal shape such as a triangle or a quadrilateral.

Specifically, in addition to the plurality of points which constitute a point cloud, a three-dimensional mesh is constituted of a plurality of edges and a plurality of faces. Each point is also expressed as a vertex or a position. Each edge corresponds to a line segment which connects two vertexes. Each face corresponds to an area enclosed by three or more edges.

In addition, a three-dimensional mesh has position information indicating three-dimensional coordinate positions of vertexes. The position information is also expressed as vertex information or geometry. Furthermore, a three-dimensional mesh has connection information indicating a relationship among a plurality of vertexes constituting an edge or a face. The connection information is also expressed as connectivity. In addition, a three-dimensional mesh has attribute information indicating an attribute with respect to a vertex, an edge, or a face. The attribute information in a three-dimensional mesh is also expressed as a texture.

For example, attribute information may indicate a color, a reflectance, or a normal vector with respect to a vertex, an edge, or a face. An orientation of a normal vector can express a front and a rear of a face.

An object file or the like may be used as a data file format of mesh data.

FIG. 16 is a conceptual diagram illustrating a data file example of the mesh data according to the present embodiment. In the example, a data file includes pieces of position information G(1) to G(N) and pieces of attribute information A1(1) to A1(N) of N-number of vertexes which constitute a three-dimensional mesh. In addition, in the example, M-number of pieces of attribute information A2(1) to A2(M) are included. An item of attribute information need not correspond one-to-one to a vertex and need not correspond one-to-one to a face. In addition, attribute information need not exist.

Connection information is indicated by a combination of indexes of vertexes. n [1, 3, 4] indicates a face of a triangle constituted of three vertexes n = 1, n = 3, and n = 4. In addition, m [2, 4, 6] indicates that pieces of attribute information m = 2, m = 4, and M = 6 respectively correspond to the three vertexes.

In addition, a substantive content of the attribute information may be described in a separate file. Furthermore, a pointer with respect to the content may be associated with a vertex, a face, or the like. For example, attribute information indicating an image with respect to a face may be stored in a two-dimensional attribute map file. In addition, a file name of the attribute map and a two-dimensional coordinate value in the attribute map may be described in pieces of attribute information A2(1) to A2(M). Methods of designating attribute information with respect to a face are not limited to these methods and any kind of method may be used.

FIG. 17 is a conceptual diagram illustrating a type of three-dimensional data according to the present embodiment. Point cloud data and mesh data may either indicate a static object or a dynamic object. A static object is an object that does not temporally change and a dynamic object is an object that temporally changes. A static object may correspond to three-dimensional data with respect to an arbitrary time point.

For example, point cloud data with respect to an arbitrary time point may be expressed as a PCC frame. In addition, mesh data with respect to an arbitrary time point may be expressed as a mesh frame. Furthermore, a PCC frame and a mesh frame may be simply expressed as a frame.

In addition, an area of an object may be limited to a certain range in a similar manner to ordinary video data or need not be limited in a similar manner to map data. Furthermore, a density of points or faces may be set in various ways. Sparse point cloud data or sparse mesh data may be used or dense point cloud data or dense mesh data may be used.

Next, encoding and decoding of a point cloud or a three-dimensional mesh will be described. A device, processing, or a syntax for encoding and decoding vertex information of a three-dimensional mesh according to the present disclosure may be applied to the encoding and decoding of a point cloud. A device, processing, or a syntax for encoding and decoding a point cloud according to the present disclosure may be applied to the encoding and decoding of vertex information of a three-dimensional mesh.

In addition, a device, processing, or a syntax for encoding and decoding attribute information of a point cloud according to the present disclosure may be applied to the encoding and decoding of connection information or attribute information of a three-dimensional mesh. Furthermore, a device, processing, or a syntax for encoding and decoding connection information or attribute information of a three-dimensional mesh according to the present disclosure may be applied to the encoding and decoding of attribute information of a point cloud.

Furthermore, at least a part of processing may be commonalized between the encoding and decoding of point cloud data and the encoding and decoding of mesh data. Accordingly, sizes of circuits and software programs can be suppressed.

FIG. 18 is a block diagram illustrating a configuration example of three-dimensional data encoder 113 according to the present embodiment. In this example, three-dimensional data encoder 113 includes vertex information encoder 121, attribute information encoder 122, metadata encoder 123, and multiplexer 124. Vertex information encoder 121, attribute information encoder 122, and multiplexer 124 may correspond to vertex information encoder 101, attribute information encoder 103, postprocessor 105, and the like illustrated in FIG. 6.

In addition, in this example, three-dimensional data encoder 113 encodes three-dimensional data according to a geometry-based encoding system. Encoding according to the geometry-based encoding system takes a three-dimensional structure into consideration. Furthermore, in encoding according to the geometry-based encoding system, attribute information is encoded using configuration information obtained during encoding of vertex information.

Specifically, first, vertex information, attribute information, and metadata included in three-dimensional data generated from sensor data are respectively input to vertex information encoder 121, attribute information encoder 122, and metadata encoder 123. In this case, connection information included in three-dimensional data may be handled in a similar manner to attribute information. In addition, in the case of point cloud data, position information may be handled as vertex information.

Vertex information encoder 121 encodes vertex information into compressed vertex information and outputs the compressed vertex information to multiplexer 124 as encoded data. In addition, vertex information encoder 121 generates metadata of the compressed vertex information and outputs the metadata to multiplexer 124. Furthermore, vertex information encoder 121 generates configuration information and outputs the configuration information to attribute information encoder 122.

Attribute information encoder 122 encodes attribute information into compressed attribute information using the configuration information generated by vertex information encoder 121 and outputs the compressed attribute information to multiplexer 124 as encoded data. In addition, attribute information encoder 122 generates metadata of the compressed attribute information and outputs the metadata to multiplexer 124.

Metadata encoder 123 encodes compressible metadata into compressed metadata and outputs the compressed metadata to multiplexer 124 as encoded data. The metadata encoded by metadata encoder 123 may be used to encode vertex information and to encode attribute information.

Multiplexer 124 multiplexes the compressed vertex information, the metadata of the compressed vertex information, the compressed attribute information, the metadata of the compressed attribute information, and the compressed metadata into a bitstream. In addition, multiplexer 124 inputs the bitstream into a system layer.

FIG. 19 is a block diagram illustrating a configuration example of three-dimensional data decoder 213 according to the present embodiment. In this example, three-dimensional data decoder 213 includes vertex information decoder 221, attribute information decoder 222, metadata decoder 223, and demultiplexer 224. Vertex information decoder 221, attribute information decoder 222, and demultiplexer 224 may correspond to vertex information decoder 201, attribute information decoder 203, preprocessor 204, and the like illustrated in FIG. 8.

In addition, in this example, three-dimensional data decoder 213 decodes three-dimensional data according to a geometry-based encoding system. Decoding according to the geometry-based encoding system takes a three-dimensional structure into consideration. Furthermore, in decoding according to the geometry-based encoding system, attribute information is decoded using configuration information obtained during decoding of vertex information.

Specifically, first, a bitstream is input from a system layer into demultiplexer 224. Demultiplexer 224 separates compressed vertex information, metadata of the compressed vertex information, compressed attribute information, metadata of the compressed attribute information, and compressed metadata from the bitstream. The compressed vertex information and the metadata of the compressed vertex information are input to vertex information decoder 221. The compressed attribute information and the metadata of the compressed attribute information are input to attribute information decoder 222. The metadata is input to metadata decoder 223.

Vertex information decoder 221 decodes vertex information from the compressed vertex information using the metadata of the compressed vertex information. In addition, vertex information decoder 221 generates configuration information and outputs the configuration information to attribute information decoder 222. Attribute information decoder 222 decodes attribute information from the compressed attribute information using the configuration information generated by vertex information decoder 221 and the metadata of the compressed attribute information. Metadata decoder 223 decodes metadata from the compressed metadata. The metadata decoded by metadata decoder 223 may be used to decode vertex information and to decode attribute information.

Subsequently, the vertex information, the attribute information, and the metadata are output from three-dimensional data decoder 213 as three-dimensional data. For example, the metadata is metadata of vertex information and attribute information and can be used in an application program.

FIG. 20 is a block diagram illustrating another configuration example of three-dimensional data encoder 113 according to the present embodiment. In this example, three-dimensional data encoder 113 includes vertex image generator 131, attribute image generator 132, metadata generator 133, video encoder 134, metadata encoder 123, and multiplexer 124. Vertex image generator 131, attribute image generator 132, and video encoder 134 may correspond to vertex information encoder 101, attribute information encoder 103, and the like illustrated in FIG. 6.

In addition, in this example, three-dimensional data encoder 113 encodes three-dimensional data according to a video-based encoding system. In encoding according to the video-based encoding system, a plurality of two-dimensional images are generated from three-dimensional data and the plurality of two-dimensional images are encoded according to a video encoding system. In this case, the video encoding system may be HEVC (high efficiency video coding), VVC (versatile video coding), or the like.

Specifically, first, vertex information and attribute information included in three-dimensional data generated from sensor data are input to metadata generator 133. In addition, the vertex information and the attribute information are respectively input to vertex image generator 131 and attribute image generator 132. Furthermore, the metadata included in the three-dimensional data is input to metadata encoder 123. In this case, connection information included in three-dimensional data may be handled in a similar manner to attribute information. In addition, in the case of point cloud data, position information may be handled as vertex information.

Metadata generator 133 generates map information of a plurality of two-dimensional images from the vertex information and the attribute information. In addition, metadata generator 133 inputs the map information into vertex image generator 131, attribute image generator 132, and metadata encoder 123.

Vertex image generator 131 generates a vertex image based on the vertex information and the map information and inputs the vertex image into video encoder 134. Attribute image generator 132 generates an attribute image based on the attribute information and the map information and inputs the attribute image into video encoder 134.

Video encoder 134 respectively encodes the vertex image and the attribute image into compressed vertex information and compressed attribute information according to the video encoding system and outputs the compressed vertex information and the compressed attribute information to multiplexer 124 as encoded data. In addition, video encoder 134 generates metadata of the compressed vertex information and metadata of the compressed attribute information and outputs the pieces of metadata to multiplexer 124.

Metadata encoder 123 encodes compressible metadata into compressed metadata and outputs the compressed metadata to multiplexer 124 as encoded data. Compressible metadata includes map information. In addition, the metadata encoded by metadata encoder 123 may be used to encode vertex information and to encode attribute information.

Multiplexer 124 multiplexes the compressed vertex information, the metadata of the compressed vertex information, the compressed attribute information, the metadata of the compressed attribute information, and the compressed metadata into a bitstream. In addition, multiplexer 124 inputs the bitstream into a system layer.

FIG. 21 is a block diagram illustrating another configuration example of three-dimensional data decoder 213 according to the present embodiment. In this example, three-dimensional data decoder 213 includes vertex information generator 231, attribute information generator 232, video decoder 234, metadata decoder 223, and demultiplexer 224. Vertex information generator 231, attribute information generator 232, and video decoder 234 may correspond to vertex information decoder 201, attribute information decoder 203, and the like illustrated in FIG. 8.

In addition, in this example, three-dimensional data decoder 213 decodes three-dimensional data according to a video-based encoding system. In decoding according to the video-based encoding system, a plurality of two-dimensional images are decoded according to a video encoding system and three-dimensional data is generated from the plurality of two-dimensional images. In this case, the video encoding system may be HEVC (high efficiency video coding), VVC (versatile video coding), or the like.

Specifically, first, a bitstream is input from a system layer into demultiplexer 224. Demultiplexer 224 separates compressed vertex information, metadata of the compressed vertex information, compressed attribute information, metadata of the compressed attribute information, and compressed metadata from the bitstream. The compressed vertex information, the metadata of the compressed vertex information, the compressed attribute information, and the metadata of the compressed attribute information are input to video decoder 234. The compressed metadata is input to metadata decoder 223.

Video decoder 234 decodes a vertex image according to the video encoding system. In doing so, video decoder 234 decodes the vertex image from the compressed vertex information using the metadata of the compressed vertex information. In addition, video decoder 234 inputs the vertex image into vertex information generator 231. Furthermore, video decoder 234 decodes an attribute image according to the video encoding system. In doing so, video decoder 234 decodes the attribute image from the compressed attribute information using the metadata of the compressed attribute information. In addition, video decoder 234 inputs the attribute image into attribute information generator 232.

Metadata decoder 223 decodes metadata from the compressed metadata. The metadata decoded by metadata decoder 223 includes map information to be used to generate vertex information and to generate attribute information. In addition, the metadata decoded by metadata decoder 223 may be used to decode the vertex image and to decode the attribute image.

Vertex information generator 231 reproduces vertex information from the vertex image according to the map information included in the metadata decoded by metadata decoder 223. Attribute information generator 232 reproduces attribute information from the attribute image according to the map information included in the metadata decoded by metadata decoder 223.

Subsequently, the vertex information, the attribute information, and the metadata are output from three-dimensional data decoder 213 as three-dimensional data. For example, the metadata is metadata of vertex information and attribute information and can be used in an application program.

FIG. 22 is a conceptual diagram illustrating a specific example of encoding processing according to the present embodiment. FIG. 22 illustrates three-dimensional data encoder 113 and description encoder 148. In this example, three-dimensional data encoder 113 includes two-dimensional data encoder 141 and mesh data encoder 142. Two-dimensional data encoder 141 includes texture encoder 143. Mesh data encoder 142 includes vertex information encoder 144 and connection information encoder 145.

Vertex information encoder 144, connection information encoder 145, and texture encoder 143 may correspond to vertex information encoder 101, connection information encoder 102, attribute information encoder 103, and the like illustrated in FIG. 6.

For example, two-dimensional data encoder 141 operates as texture encoder 143 and generates a texture file by encoding a texture corresponding to attribute information as two-dimensional data according to an image encoding system or a video encoding system.

In addition, mesh data encoder 142 operates as vertex information encoder 144 and connection information encoder 145 and generates a mesh file by encoding vertex information and connection information. Mesh data encoder 142 may further encode mapping information with respect to a texture. The encoded mapping information may be included in a mesh file.

In addition, description encoder 148 generates a description file by encoding a description corresponding to metadata such as text data. Description encoder 148 may encode a description in the system layer. For example, description encoder 148 may be included in system multiplexer 114 illustrated in FIG. 12.

Due to the operation described above, a bitstream including a texture file, a mesh file, and a description file is generated. The files may be multiplexed in the bitstream in a file format such as gITF (graphics language transmission format) or USD (universal scene description).

Note that three-dimensional data encoder 113 may include two mesh data encoders as mesh data encoder 142. For example, one mesh data encoder encodes vertex information and connection information of a static three-dimensional mesh and the other mesh data encoder encodes vertex information and connection information of a dynamic three-dimensional mesh.

In addition, two mesh files may be included in the bitstream so as to correspond to the three-dimensional meshes. For example, one mesh file corresponds to the static three-dimensional mesh and the other mesh file corresponds to the dynamic three-dimensional mesh.

Furthermore, the static three-dimensional mesh may be an intra-frame three-dimensional mesh which is encoded using intra-prediction and the dynamic three-dimensional mesh may be an inter-frame three-dimensional mesh which is encoded using inter-prediction. In addition, as information of the dynamic three-dimensional mesh, difference information between vertex information or connection information of the intra-frame three-dimensional mesh and vertex information or connection information of the inter-frame three-dimensional mesh may be used.

FIG. 23 is a conceptual diagram illustrating a specific example of decoding processing according to the present embodiment. FIG. 23 illustrates three-dimensional data decoder 213, description decoder 248, and presenter 247. In this example, three-dimensional data decoder 213 includes two-dimensional data decoder 241, mesh data decoder 242, and mesh reconstructor 246. Two-dimensional data decoder 241 includes texture decoder 243. Mesh data decoder 242 includes vertex information decoder 244 and connection information decoder 245.

Vertex information decoder 244, connection information decoder 245, texture decoder 243, and mesh reconstructor 246 may correspond to vertex information decoder 201, connection information decoder 202, attribute information decoder 203, postprocessor 205, and the like illustrated in FIG. 8. Presenter 247 may correspond to presenter 215 and the like illustrated in FIG. 12.

For example, two-dimensional data decoder 241 operates as texture decoder 243 and decodes a texture corresponding to attribute information from a texture file as two-dimensional data according to an image encoding system or a video encoding system.

In addition, mesh data decoder 242 operates as vertex information decoder 244 and connection information decoder 245 and decodes vertex information and connection information from a mesh file. Mesh data decoder 242 may further decode mapping information with respect to a texture from the mesh file.

Furthermore, description decoder 248 decodes a description corresponding to metadata such as text data from a description file. Description decoder 248 may decode a description in the system layer. For example, description decoder 248 may be included in system demultiplexer 214 illustrated in FIG. 12.

Mesh reconstructor 246 reconstructs a three-dimensional mesh from vertex information, connection information, and a texture according to a description. Presenter 247 renders and outputs the three-dimensional mesh according to the description.

Due to the operation described above, a three-dimensional mesh is reconstructed and output from a bitstream including a texture file, a mesh file, and a description file.

Note that three-dimensional data decoder 213 may include two mesh data decoders as mesh data decoder 242. For example, one mesh data decoder decodes vertex information and connection information of a static three-dimensional mesh and the other mesh data decoder decodes vertex information and connection information of a dynamic three-dimensional mesh.

In addition, two mesh files may be included in the bitstream so as to correspond to the three-dimensional meshes. For example, one mesh file corresponds to the static three-dimensional mesh and the other mesh file corresponds to the dynamic three-dimensional mesh.

Furthermore, the static three-dimensional mesh may be an intra-frame three-dimensional mesh which is encoded using intra-prediction and the dynamic three-dimensional mesh may be an inter-frame three-dimensional mesh which is encoded using inter-prediction. In addition, as information of the dynamic three-dimensional mesh, difference information between vertex information or connection information of the intra-frame three-dimensional mesh and vertex information or connection information of the inter-frame three-dimensional mesh may be used.

An encoding system of a dynamic three-dimensional mesh may be called DMC (dynamic mesh coding). In addition, a video-based encoding system of a dynamic three-dimensional mesh may be called VDMC (video-based dynamic mesh coding).

An encoding system of a point cloud may be called PCC (point cloud compression). A video-based encoding system of a point cloud may be called V-PCC (video-based point cloud compression). In addition, a geometry-based encoding system of a point cloud may be called G-PCC (geometry-based point cloud compression).

### <Implementation example>

FIG. 24 is a block diagram illustrating an implementation example of encoding device 100 according to the present embodiment. Encoding device 100 includes circuit 151 and memory 152. For example, a plurality of constituent elements of encoding device 100 illustrated in FIG. 5 and the like are implemented by circuit 151 and memory 152 illustrated in FIG. 24.

Circuit 151 is a circuit which performs information processing and which is capable of accessing memory 152. For example, circuit 151 is a dedicated or general-purpose electric circuit which encodes a three-dimensional mesh. Circuit 151 may be a processor such as a CPU. Alternatively, circuit 151 may be a set of a plurality of electric circuits.

Memory 152 is a dedicated or general-purpose memory that stores information used by circuit 151 to encode a three-dimensional mesh. Memory 152 may be an electric circuit and may be connected to circuit 151. In addition, memory 152 may be included in circuit 151. Alternatively, memory 152 may be a set of a plurality of electric circuits. Furthermore, memory 152 may be a magnetic disk, an optical disk, or the like or may be expressed as a storage, a recording medium, or the like. In addition, memory 152 may be a non-volatile memory or a volatile memory.

For example, memory 152 may store a three-dimensional mesh or a bitstream. In addition, memory 152 may store a program used by circuit 151 to encode a three-dimensional mesh.

Note that in encoding device 100, all of the plurality of constituent elements illustrated in FIG. 5 and the like need not be implemented and all of the plurality of processing steps described herein need not be performed. A part of the plurality of constituent elements illustrated in FIG. 5 and the like may be included in another device and a part of the plurality of processing steps described herein may be executed by another device. In addition, a plurality of constituent elements according to the present disclosure may be optionally combined and implemented or a plurality of processing steps according to the present disclosure may be optionally combined and executed in encoding device 100.

FIG. 25 is a block diagram illustrating an implementation example of decoding device 200 according to the present embodiment. Decoding device 200 includes circuit 251 and memory 252. For example, a plurality of constituent elements of decoding device 200 illustrated in FIG. 7 and the like are implemented by circuit 251 and memory 252 illustrated in FIG. 25.

Circuit 251 is a circuit which performs information processing and which is capable of accessing memory 252. For example, circuit 251 is a dedicated or general-purpose electric circuit which decodes a three-dimensional mesh. Circuit 251 may be a processor such as a CPU. Alternatively, circuit 251 may be a set of a plurality of electric circuits.

Memory 252 is a dedicated or general-purpose memory that stores information used by circuit 251 to decode a three-dimensional mesh. Memory 252 may be an electric circuit and may be connected to circuit 251. In addition, memory 252 may be included in circuit 251. Alternatively, memory 252 may be a set of a plurality of electric circuits. Furthermore, memory 252 may be a magnetic disk, an optical disk, or the like or may be expressed as a storage, a recording medium, or the like. In addition, memory 252 may be a non-volatile memory or a volatile memory.

For example, memory 252 may store a three-dimensional mesh or a bitstream. In addition, memory 252 may store a program used by circuit 251 to decode a three-dimensional mesh.

Note that in decoding device 200, all of the plurality of constituent elements illustrated in FIG. 7 and the like need not be implemented and all of the plurality of processing steps described herein need not be performed. A part of the plurality of constituent elements illustrated in FIG. 7 and the like may be included in another device and a part of the plurality of processing steps described herein may be executed by another device. In addition, a plurality of constituent elements according to the present disclosure may be optionally combined and implemented or a plurality of processing steps according to the present disclosure may be optionally combined and executed in decoding device 200.

An encoding method and a decoding method including steps performed by each constituent element of encoding device 100 and decoding device 200 according to the present disclosure may be executed by any device or system. For example, a part of or all of the encoding method and the decoding method may be executed by a computer including a processor, a memory, an input/output circuit, and the like. In doing so, the encoding method and the decoding method may be executed by having the computer execute a program that enables the computer to execute the encoding method and the decoding method.

In addition, a program or a bitstream may be recorded on a non-transitory computer-readable recording medium such as a CD-ROM.

An example of a program may be a bitstream. For example, a bitstream including an encoded three-dimensional mesh includes a syntax element that enables decoding device 200 to decode the three-dimensional mesh. In addition, the bitstream causes decoding device 200 to decode the three-dimensional mesh according to the syntax element included in the bitstream. Therefore, a bitstream can perform a similar role to a program.

The bitstream described above may be an encoded bitstream including an encoded three-dimensional mesh or a multiplexed bitstream including an encoded three-dimensional mesh and other information.

In addition, each constituent element of encoding device 100 and decoding device 200 may be constituted of dedicated hardware, general-purpose hardware which executes the program or the like described above, or a combination thereof. Furthermore, the general-purpose hardware may be constituted of a memory on which a program is recorded, a general-purpose processor which reads the program from the memory and executes the program, and the like. In this case, the memory may be a semiconductor memory, a hard disk, or the like and the general-purpose processor may be a CPU or the like.

Furthermore, the dedicated hardware may be constituted of a memory, a dedicated processor, and the like. For example, the dedicated processor may execute the encoding method and the decoding method by referring to a memory for recording data.

In addition, as described above, the respective constituent elements of encoding device 100 and decoding device 200 may be electric circuits. The electric circuits may constitute one electric circuit as a whole or may be respectively different electric circuits. Furthermore, the electric circuits may correspond to dedicated hardware or to general-purpose hardware which executes the program or the like described above. Moreover, encoding device 100 and decoding device 200 may be implemented as integrated circuits.

In addition, encoding device 100 may be a transmitting device which transmits a three-dimensional mesh. Decoding device 200 may be a receiving device which receives a three-dimensional mesh.

### <Entropy Encoding and Entropy Decoding>

A three-dimensional model digitally represents an object in such a manner that a user can three-dimensionally search the model through zooming, panning, and rotation while temporarily rendering the model. One method of constructing such a representation is to construct a three-dimensional mesh with polygons. The model stores positions of vertexes of polygons, connectivity of the vertexes, and attributes associated with the vertexes (such as normal and UV patches). The polygons are triangles or rectangles, for example.

To store all of these items of information in an uncompressed manner, a vast storage area is needed, and therefore, a vast bandwidth is needed for transmission. Polygons forming a mesh, in particular, polygons in temporal or spatial proximity to each other, often have repetitive patterns and similar attributes. Such a repetition can be used for planning encoding and decoding methods efficient for storage and transmission.

FIG. 26 is a block diagram illustrating another configuration example of the encoding/decoding system according to the embodiment. As illustrated in FIG. 26, the encoding/decoding system includes a pair of encoding device 100 and decoding device 200. The encoding/decoding system receives a three-dimensional mesh frame that is input in forms of vertex three-dimensional coordinates (vertex information), connectivity (connection information) and associated attributes (attribute information).

Encoding device 100 encodes all associated information into a bitstream (compressed bitstream). The bitstream may be formed by a plurality of bitstreams. The bitstream is transmitted to decoding device 200 through a transmission path. Decoding device 200 decodes the bitstream and generates a three-dimensional model (three-dimensional mesh) from the decoded vertex three-dimensional coordinates, connectivity and associated attributes.

FIG. 27 is a block diagram illustrating another configuration example of encoding device 100 according to the embodiment. In this example, encoding device 100 includes preprocessor 521 and encoding processor 522.

Preprocessor 521 reads a three-dimensional mesh, processes the three-dimensional mesh, extracts a base mesh, a displacement vector, texture data and an attribute map, and passes the base mesh, the displacement vector, the texture data, and the attribute map to encoding processor 522. Encoding processor 522 separately compresses the base mesh, the displacement vector, the texture data, and the attribute map, and combines them to generate a bitstream.

FIG. 28 is a block diagram illustrating another configuration example of decoding device 200 according to the embodiment. In this example, decoding device 200 includes decoding processor 622 and postprocessor 623.

Decoding processor 622 reads a bitstream, separates a base mesh, a displacement vector, texture data, and an attribute map from the bitstream, separately decodes them, and passes them to postprocessor 623. Postprocessor 623 processes the base mesh according to the displacement vector and the attribute map to generate a three-dimensional mesh.

In the encoding method, for example, the original three-dimensional mesh is first decimated to obtain a base mesh that includes less vertexes. In the base mesh, a vertex need not be located at the original position, and connectivity of vertexes may change as a result of the decimation.

After that, a plurality of new vertexes are repeatedly added between connected existing vertexes in the base mesh to segmentalize the base mesh. Then, a displacement vector between the segmentalized three-dimensional mesh and the input three-dimensional mesh is calculated. The displacement vector is used in decoding device 200 so that segmentalized vertexes are located at predicted positions.

This information is transformed into a wavelet coefficient through wavelet transformation and encoded using a video codec by mapping a coefficient onto a plane of a video frame. A texture of the three-dimensional mesh and a map for combining all information for reconstruction are separately encoded and then combined into one bitstream.

Decoding device 200 first decodes a base mesh. A plurality of new vertexes are repeatedly added between connected existing vertexes in the base mesh to segmentalize the base mesh. Then, all vertexes and connectivity are obtained. The vertexes may be located at different positions than the corresponding vertexes in the input three-dimensional mesh.

Then, a wavelet coefficient is decoded by a video decoder, and an inverse wavelet transformation is applied to reconstruct a displacement vector. Using this information, the vertexes are placed at predicted positions, the texture is mapped onto a plane created based on the vertexes and the connectivity thereof, and thereby the three-dimensional mesh is completely decoded.

Recent developments in obtaining, modeling, and rendering of three-dimensional data are promoting applications concerning three-dimensional contents for various platforms and devices. Three-dimensional media is a very convenient method for highly immersive user experience in applications such as digital entertainment, health care, and robotics.

A three-dimensional mesh is used for rendering immersive media, for example, and is formed of several polygons that represent a boundary face of a volumetric object. Each polygon includes vertexes in a three-dimensional space and connection information that defines a way of connection of the vertexes. Optionally, the three-dimensional mesh may include an attribute, such as color, normal, and material property.

A dynamic mesh is a type of mesh in which at least one of connection information, geometry information, mapping information, a vertex attribute, and an attribute map temporally changes. The dynamic mesh is formed of a vast amount of data that temporally changes, so that a mass storage may be needed. Therefore, to appropriately store and transmit such data, an efficient compression solution is essential.

A method referred to Edgebreaker is a method of encoding a three-dimensional mesh in which individual meshes are triangles. In this method, each triangle forming a three-dimensional mesh is classified into five types C, L, E, R, and S according to the pattern of adjacent triangles, and the three-dimensional mesh is represented by a character string formed by a combination of C, L, E, R, and S. Here, S means split, E means end, and C, L, and R each mean the position of an adjacent triangle to be encoded next.

FIG. 29 is a conceptual diagram illustrating the five connection types according to this embodiment. The connection type indicates a connection relationship between a triangle to be processed and a triangle that is not yet processed. Here, "to be processed" corresponds to "to be visited", "already processed" corresponds to "already visited", and "not yet processed" corresponds to "not yet visited". Note that the vertexes of a visited triangle may be regarded as already visited. Furthermore, a space where no triangle exists and a vertex abutting on the space may be regarded as already visited.

In type S, along the path to the triangle to be processed in the processing order, a plurality of triangles not yet processed are separately connected to the triangle to be processed on both sides thereof. In other words, a plurality of triangles not yet processed are connected to the triangle to be processed on both sides thereof in a split manner. For example, in type S, vertex v is already visited. After the triangle of type S is processed, the triangle not yet processed connected to the right side of the triangle of type S is first processed. After that, specifically, after the triangle of type E is processed, the triangle not yet processed connected to the left side of the triangle of type S is processed.

In type C, along the path to the triangle to be processed in the processing order, a plurality of triangles not yet processed are connected to the triangle to be processed on both sides thereof without being separated. In other words, a plurality of triangles not yet processed are connected to the triangle to be processed on both sides thereof in a non-split manner. For example, in type C, vertex v is not yet visited. After the triangle of type C is processed, the triangle not yet processed connected to the right side of the triangle of type C is processed.

In type L, along the path to the triangle to be processed in the processing order, any triangle not yet processed is not connected to the left side of the triangle to be processed, and a triangle not yet processed is connected to the right side of the triangle to be processed. For example, in type L, vertex v is already visited. After the triangle of type L is processed, the triangle not yet processed connected to the right side of the triangle of type L is processed.

In type R, along the path to the triangle to be processed in the processing order, any triangle not yet processed is not connected to the right side of the triangle to be processed, and a triangle not yet processed is connected to the left side of the triangle to be processed. For example, in type R, vertex v is already visited. After the triangle of type R is processed, the triangle not yet processed connected to the left side of the triangle of type R is processed.

In type E, along the path to the triangle to be processed in the processing order, any triangle not yet processed is not connected to the right side and the left side of the triangle to be processed. For example, in type E, vertex v is already visited. After the triangle of type E is processed, for example, a triangle not yet processed connected to the left side of an already processed triangle of type S is processed. Alternatively, after the triangle of type E is processed, the process ends.

FIG. 30 is a conceptual diagram illustrating an example of the connection types sequentially determined according to this embodiment. As illustrated in FIG. 30, the connection type of each of the plurality of triangles forming the three-dimensional mesh is sequentially determined to be any of the plurality of types illustrated in FIG. 29, and then encoding and decoding are performed. The connection type indicates a connection relationship between a plurality of triangles, and can indicate the processing order of the plurality of triangles. Furthermore, the connection type can be used for reconstruction of the three-dimensional model.

Furthermore, types C, L, E, R, and S may be assigned with bit patterns 0, 110, 111, 101, and 100, respectively. These bit patterns may be encoded. Furthermore, concerning the leading triangle, in addition to type C, L, E, R, or S, information about each vertex of the leading triangle (such as three-dimensional coordinate positions, texture map coordinate positions, and normal vectors) may be encoded. Furthermore, concerning the triangle of type C, information about a new additional vertex may be encoded, for example.

For example, Edgebreaker according to the present disclosure may be used for encoding processing and decoding processing for a three-dimensional mesh, or may be used for encoding processing and decoding processing for a base mesh illustrated in FIGS. 27 and 28. Specifically, the processing according to the present disclosure may be applied to encoding processing and decoding processing for information that indicates a connection relationship between a plurality of faces that are a plurality of polygons forming a three-dimensional mesh.

FIG. 31 is a flowchart illustrating encoding processing and decoding processing for a connection type according to this embodiment. Specifically, FIG. 31 illustrates an example of a method of encoding the type (C, L, E, R, or S) associated with each triangle forming a three-dimensional mesh on a triangle basis. Here, the encoding is entropy encoding, such as arithmetic encoding or Huffman encoding.

In this method, the value of variable prev is set according to the connection type encoded immediately before the current connection type. Then, according to prev, a parameter that controls the entropy encoding of the connection type of the triangle is determined. Then, according to the parameter determined, entropy encoding of the connection type to be encoded is performed.

Specifically, first, prev is set to an initial value (0, for example) (S101). Then, entropy encoding of the connection type of each triangle is repeated (S102 to S109). Here, a parameter for controlling the entropy encoding of the connection type of the triangle is determined according to prev, and entropy encoding of the connection type to be encoded is performed (S103).

For example, when arithmetic encoding is used for entropy encoding, a context used for determining a predicted occurrence probability of information to be encoded is determined from among a plurality of contexts according to prev. Alternatively, when Huffman encoding is used for entropy encoding, a codeword table used for encoding is determined from among a plurality of codeword tables according to prev.

According to the encoded connection type, then, the value of prev used for controlling entropy encoding of the next connection type to be encoded is set (S104 to S107). Specifically, first, whether the encoded connection type is type S or not is determined. When the encoded connection type is type S (Yes in S104), prev is set to 1 (S106).

When the encoded connection type is not type S (No in S104: the encoded connection type is any of C, R, L, and E), whether the encoded connection type is type E or not is determined (S105). When the encoded connection type is type E (Yes in S105), prev is set to 2 (S107). When the encoded connection type is not type E (No in S105: the encoded connection type is any of C, R, and L), prev is set to 0 (S108).

As a result of trials, the inventors have made a new finding that the tendency of the occurrence probability of each type encoded immediately after encoding of type S or E is different from the tendency of the occurrence probability of each type encoded immediately after type C, R, or L. Therefore, by switching the control of the entropy encoding according to the connection type encoded immediately before the current connection type as described above, the encoding efficiency of the entropy encoding may be able to be improved.

Note that FIG. 31 illustrates an example in which the connection type is classified into three groups, a group of type S, a group of type E, and a group of types C, R, and L, for switching the control of the entropy encoding. However, the context may be determined for each of the five types.

Furthermore, in the example in FIG. 31, the determination and setting concerning type E (S105 and S107) may be omitted. In that case, the connection type may be classified into two groups, a group of type S and a group of types C, R, L, and E, for switching the control of the entropy encoding.

In this way, the encoding efficiency may be improved compared with the case where there is only one group, and the memory utilization may be reduced compared with the case where there are three groups.

Furthermore, in FIG. 31, the value of prev is set to any of 0, 1, and 2 according to the encoded connection type. However, another method may be used in which three groups, a group of type S, a group of type E, and a group of types C, R, and L, may be distinguished for switching the control of the entropy encoding.

Furthermore, although the control of the entropy encoding is switched in the above description, "encoding" may be interchanged with "decoding", and the control of entropy decoding may be switched.

Furthermore, in the above description, the context of arithmetic encoding is selected according to the type associated with the triangle processed immediately before the triangle to be processed. However, the selection of the context is not limited to this example. Specifically, the selection of the context is not limited to the selection according to the immediately preceding type, and the parameter for entropy encoding or entropy decoding of the connection information to be processed may be determined according to encoded or decoded connection information (link information).

The encoded or decoded link information may be link information of the polygon encoded or decoded immediately before the current polygon. Furthermore, the entropy encoding or the entropy decoding may be arithmetic encoding or arithmetic decoding, and in that case, the parameter may be the context or a parameter for deriving the context.

In an example of the selection of the context, a first context may be used when the link information of the polygon encoded or decoded immediately before the current polygon is not a type that indicates a split. And when the link information of the polygon encoded or decoded immediately before the current polygon is a type that indicates a split, a second context may be used.

In other words, for the polygon to be processed, the context may be determined based on whether the type of the link information of a processed polygon at a predetermined position is a type that indicates a split. Alternatively, for the polygon to be processed, the context may be determined based on whether the type of the link information of a processed polygon at a predetermined position is a type that indicates an end.

Furthermore, whether to determine the context based on the type of the processed polygon may be switched. Furthermore, the connection type used as a determination criterion may be switched. In that case, a parameter may be encoded that indicates whether the switching is appropriate or not, the context to be selected, or the connection type of the polygon associated with the context, for example.

Furthermore, the sequence of the processing including determinations and settings may be changed, or part of the processing may be omitted. For example, the determination of type S (S104) and the determination of type E (S105) may be interchanged, or one of the determinations may be omitted.

FIG. 32 is a flowchart illustrating a first specific example of the encoding of the connection type according to this embodiment. Specifically, FIG. 32 illustrates an example of the encoding processing (S103) in FIG. 31. In this example, types C, L, E, R, and S are assigned with bit patterns 0, 110, 111, 101, and 100, respectively, and the entropy encoding is performed starting from the most significant bit.

First, whether the connection type of the triangle to be encoded is type C is determined (S201). When the connection type is type C (Yes in S201), 0 is encoded as the value of first bit b0 by entropy encoding according to prev (S202). When the connection type is not type C (No in S201: the connection type is any of L, E, R, and S), 1 is encoded as the value of first bit b0 by entropy encoding according to prev (S203).

Then, whether the connection type of the triangle to be encoded is one of types R and S is determined. When the connection type is one of types R and S (Yes in S204), 0 is encoded as the value of second bit b1 by entropy encoding according to prev (S205).

Then, whether the connection type of the triangle to be encoded is type S is determined (S207). When the connection type is type S (Yes in S207), 0 is encoded as the value of third bit b2 by entropy encoding according to prev (S211). When the connection type is not type S (No in S207: the connection type is R), 1 is encoded as the value of third bit b2 by entropy encoding according to prev (S209).

When the connection type is not one of types R and S (No in S204: the connection type is L or E), 1 is encoded as the value of second bit b1 by entropy encoding according to prev (S206).

Then, whether the connection type of the triangle to be encoded is type L is determined (S208). When the connection type is type L (Yes in S208), 0 is encoded as the value of third bit b2 by entropy encoding according to prev (S212). When the connection type is not type L (No in S208: the connection type is E), 1 is encoded as the value of third bit b2 by entropy encoding according to prev (S210).

Note that when arithmetic encoding is used for the entropy encoding, the context used for determining the predicted occurrence probability of information to be encoded is determined from among a plurality of contexts according to prev. When Huffman encoding is used for the entropy encoding, the codeword table used for encoding is determined from among a plurality of codeword tables according to prev.

Furthermore, in the entropy encoding of the value of third bit b2 (S207 to S212), the context or codeword table may be determined according to the value of second bit b1 in addition to prev.

The tendency of the occurrence probability of each type encoded immediately after type S or E is different from the tendency of the occurrence probability of each type encoded immediately after type C, R, or L. Therefore, as described above, the control of the entropy encoding is switched according to prev determined in the procedure in FIG. 31. In this way, the encoding efficiency of the entropy encoding may be able to be improved.

Furthermore, the content of the event indicated by the value of third bit b2 depends on the value of second bit b1 (it is type S or R when b1 = 0, and type L or E when b1 = 1). Therefore, if the context or codeword table is determined according to the value of second bit b1 in addition to prev in the entropy encoding of the value of third bit b2, the encoding efficiency may be able to be further improved.

In the above description, encoding a bit may be inputting a bit to an encoding engine. Furthermore, in the encoding engine, a plurality of bits may be compressed into less bits.

FIG. 33 is a flowchart illustrating a first specific example of the decoding of the connection type according to this embodiment. Specifically, FIG. 33 illustrates an example of the decoding processing (S103) in FIG. 31. In this example, entropy decoding of the bit sequence encoded in the encoding method described above with reference to FIG. 32 is performed, and the connection type of the triangle to be decoded is set to any of types C, L, E, R, and S.

First, the value of first bit b0 is decoded by entropy decoding according to prev (S301). Then, whether the value of first bit b0 is 0 is determined (S302). When the value of first bit b0 is 0 (Yes in S302), the connection type of the triangle to be decoded is set to type C (S303).

When the value of first bit b0 is not 0 (No in S302), the value of second bit b1 is decoded by entropy decoding according to prev (S304). Furthermore, the value of third bit b2 is decoded by entropy decoding according to prev (S305). Then, the bit pattern of second bit b1 and third bit b2 is determined (S306 to S308). Then, according to the determination result, the connection type of the triangle to be decoded is set to any of L, E, R, and S (S309 to S312).

Specifically, when the value of second bit b1 and the value of third bit b2 are 0 and 0, respectively (Yes in S306 and Yes in S307), the connection type is set to type S (S311). When the value of second bit b1 and the value of third bit b2 are 0 and 1, respectively (Yes in S306 and No in S307), the connection type is set to type R (S309).

When the value of second bit b1 and the value of third bit b2 are 1 and 0, respectively (No in S306 and Yes in S308), the connection type is set to type L (S312). When the value of second bit b1 and the value of third bit b2 are 1 and 1, respectively (No in S306 and No in S308), the connection type is set to type E (S310).

Note that when arithmetic decoding is used for the entropy decoding, the context used for determining the predicted occurrence probability of information to be decoded is determined from among a plurality of contexts according to prev. When Huffman decoding is used for the entropy decoding, the codeword table used for decoding is determined from among a plurality of codeword tables according to prev. Furthermore, in the entropy decoding of the value of third bit b2, the context or codeword table may be determined according to the value of second bit b1 in addition to prev.

The tendency of the occurrence probability of each type decoded immediately after type S or E is different from the tendency of the occurrence probability of each type decoded immediately after type C, R, or L, so that as described above, the control of the entropy decoding is switched according to prev determined in the procedure in FIG. 31. In this way, the encoding efficiency of the entropy encoding may be able to be improved.

Furthermore, the content of the event indicated by the value of third bit b2 depends on the value of second bit b1 (it is type S or R when b1 = 0, and type L or E when b1 = 1). Therefore, if the context or codeword table is determined according to the value of second bit b1 in addition to prev in the entropy decoding of the value of third bit b2, the encoding efficiency may be able to be further improved.

FIG. 34 is a flowchart illustrating a second specific example of the encoding of the connection type according to this embodiment. Specifically, FIG. 34 illustrates an example of the encoding processing (S103) in FIG. 31. In this example, types C, R, E, S and L are assigned with bit patterns 0, 10, 110, 1110, and 1111, respectively, and the entropy encoding is performed starting from the most significant bit.

First, whether the connection type of the triangle to be encoded is type C is determined (S401). When the connection type is type C (Yes in S401), 0 is encoded as the value of first bit b0 by entropy encoding according to prev (S405). When the connection type is not type C (No in S401: the connection type is any of L, E, R, and S), 1 is encoded as the value of first bit b0 by entropy encoding according to prev (S402).

Then, whether the connection type of the triangle to be encoded is type R is determined (S403). When the connection type is type R (Yes in S403), 0 is encoded as the value of second bit b1 by entropy encoding according to prev (S408). When the connection type is not type R (No in S403: the connection type is any of L, E, and S), 1 is encoded as the value of second bit b1 by entropy encoding according to prev (S404).

Then, whether the connection type of the triangle to be encoded is type E is determined (S406). When the connection type is type E (Yes in S406), 0 is encoded as the value of third bit b2 by entropy encoding according to prev (S410). When the connection type is not type E (No in S406: the connection type is any of L and S), 1 is encoded as the value of third bit b2 by entropy encoding according to prev (S407).

Then, whether the connection type of the triangle to be encoded is type S is determined (S409). When the connection type is type S (Yes in S409), 0 is encoded as the value of fourth bit b3 by entropy encoding according to prev (S412). When the connection type is not type S (No in S409: the connection type is L), 1 is encoded as the value of fourth bit b3 by entropy encoding according to prev (S411).

Note that when arithmetic encoding is used for the entropy encoding, the context used for determining the predicted occurrence probability of information to be encoded is determined from among a plurality of contexts according to prev. When Huffman encoding is used for the entropy encoding, the codeword table used for encoding is determined from among a plurality of codeword tables according to prev.

The tendency of the occurrence probability of each type encoded immediately after type S or E is different from the tendency of the occurrence probability of each type encoded immediately after type C, R, or L. Therefore, as described above, the control of the entropy encoding is switched according to prev determined in the procedure in FIG. 31. In this way, the encoding efficiency of the entropy encoding may be able to be improved.

Furthermore, in the above description, types C, R, E, S, and L are assigned with bit patterns 0, 10, 110, 1110, and 1111, respectively. However, the types determined in the determination processing (S401, S403, S406, and S409) can be set according to the way of assignment of bit patterns. In this way, any assignment is possible.

Furthermore, a type whose occurrence frequency is high may be assigned with a short bit pattern. In this way, the encoding efficiency may be able to be improved. Therefore, types C and R, whose occurrence frequencies are high, may be assigned with bit patterns 0 and 10, respectively.

FIG. 35 is a flowchart illustrating a second specific example of the decoding of the connection type according to this embodiment. Specifically, FIG. 35 illustrates an example of the decoding processing (S103) in FIG. 31. In this example, entropy decoding of the bit sequence encoded in the encoding method described above with reference to FIG. 34 is performed, and the connection type of the triangle to be decoded is set to any of types C, L, E, R, and S.

First, the value of first bit b0 is decoded by entropy decoding according to prev (S501). Then, whether the value of first bit b0 is 0 is determined (S502). When the value of first bit b0 is 0 (Yes in S502), the connection type of the triangle to be decoded is set to type C (S505). When the value of first bit b0 is not 0 (No in S502), the value of second bit b1 is decoded by entropy decoding according to prev (S503).

Then, whether the value of second bit b1 is 0 is determined (S504). When the value of second bit b1 is 0 (Yes in S504), the connection type of the triangle to be decoded is set to type R (S508). When the value of second bit b1 is not 0 (No in S504), the value of third bit b2 is decoded by entropy decoding according to prev (S506).

Then, whether the value of third bit b2 is 0 is determined (S507). When the value of third bit b2 is 0 (Yes in S507), the connection type of the triangle to be decoded is set to type E (S511). When the value of third bit b2 is not 0 (No in S507), the value of fourth bit b3 is decoded by entropy decoding according to prev (S509).

Then, whether the value of fourth bit b3 is 0 is determined (S510). When the value of fourth bit b3 is 0 (Yes in S510), the connection type of the triangle to be decoded is set to type S (S513). When the value of fourth bit b3 is not 0 (No in S510), the connection type of the triangle to be decoded is set to type L (S512).

Note that when arithmetic decoding is used for the entropy decoding, the context used for determining the predicted occurrence probability of information to be decoded is determined from among a plurality of contexts according to prev. When Huffman decoding is used for the entropy decoding, the codeword table used for decoding is determined from among a plurality of codeword tables according to prev.

The tendency of the occurrence probability of each type decoded immediately after type S or E is different from the tendency of the occurrence probability of each type decoded immediately after type C, R, or L, so that as described above, the control of the entropy decoding is switched according to prev determined in the procedure in FIG. 31. In this way, the encoding efficiency of the entropy encoding may be able to be improved.

Furthermore, in the above description, types C, R, E, S, and L are assigned with bit patterns 0, 10, 110, 1110, and 1111, respectively. However, the types set in the setting processing (S505, S508, S511, S513, and S512) can be set according to the way of assignment of bit patterns. In this way, any assignment is possible.

Furthermore, a type whose occurrence frequency is high may be assigned with a short bit pattern. In this way, the encoding efficiency may be able to be improved. Therefore, types C and R, whose occurrence frequencies are high, may be assigned with bit patterns 0 and 10, respectively.

FIG. 36 is a block diagram illustrating another configuration example of the encoding/decoding system according to this embodiment. In this example, the encoding/decoding system includes encoding device 100 and decoding device 200. Furthermore, encoding device 100 includes first quantizer 531, prediction/transformation processor 532, second quantizer 533, binarizer 534, and arithmetic encoder 535. Furthermore, decoding device 200 includes first inverse quantizer 631, prediction/inverse transformation processor 632, second inverse quantizer 633, inverse binarizer 634, and arithmetic decoder 635.

For example, in encoding device 100, first quantizer 531 quantizes a three-dimensional coordinate position and a texture map coordinate position of a three-dimensional mesh. Then, prediction/transformation processor 532 performs prediction processing, transformation processing of a prediction residual, and other processing for reducing the redundancy associated with the continuity in temporal and spatial directions. Second quantizer 533 quantizes the prediction residual.

After that, binarizer 534 transforms information required for decoding of the three-dimensional mesh, such as a parameter involved with the prediction or a quantized value of the prediction residual, into a binary representation. Arithmetic encoder 535 performs arithmetic encoding of the binary representation and outputs a bitstream.

In decoding device 200, first, arithmetic decoder 635 performs arithmetic decoding of the bitstream to restore the binary representation of various kinds of information. Then, from the binary representation, inverse binarizer 634 restores the parameter involved with the prediction, the quantized value of the prediction residual and the like. Second inverse quantizer 633 performs inverse quantization of the quantized prediction residual. After that, prediction/inverse transformation processor 632 performs prediction processing, inverse transformation processing of the transformed prediction residual and other processing to restore the quantized three-dimensional mesh. Then, first inverse quantizer 631 performs inverse quantization and outputs the three-dimensional mesh.

Note that all the processing described in this example do not necessarily need to be performed. For example, some processing, such as the first quantization, the second quantization, or the transformation processing of the prediction residual, may be omitted.

For the three-dimensional coordinate position and the texture map coordinate position of a vertex of the leading triangle of the three-dimensional mesh, an arithmetic encoding that uses the exponential Golomb code for binarization may be performed. The three-dimensional coordinate position and the texture map coordinate position of the vertex of the leading triangle of the three-dimensional mesh are often large according to the bit precision of the respective values. Therefore, an exponential Golomb code of the order defined according to the bit precision may be used.

Here, exponential Golomb codes of higher orders are suitable for encoding of greater values and may allow efficient encoding of greater values. Furthermore, exponential Golomb codes of lower orders are suitable for encoding of smaller values and may allow efficient encoding of smaller values.

Furthermore, the texture map coordinate position is a two-dimensional coordinate position determined by placing a texture corresponding to a triangle of a three-dimensional mesh on a two-dimensional image and therefore can assume any coordinate value across the two-dimensional image. On the other hand, the three-dimensional coordinate position represents the position on the surface of a three-dimensional object and therefore tends to assume a coordinate value in the periphery of the three-dimensional object. Therefore, the prediction error of the three-dimensional coordinate position tends to be small, and the prediction error of the texture map coordinate position tends to be large.

Therefore, an order closer to the bit precision may be used for the encoding of the texture map coordinate position, compared with the encoding of the three-dimensional coordinate position. This may enable efficient encoding.

Specifically, the bit precision and the order for the three-dimensional coordinate position are defined as a first bit precision and a first order, respectively, and the bit precision and the order for the texture map coordinate position are defined as a second bit precision and a second order, respectively. In this case, the first order and the second order may be set to values that satisfy a relation: first bit precision - first order ≥ second bit precision - second order. Here, the bit precision is the number of bits used for representation of the coordinate position, for example. This may enable efficient encoding.

For example, the first order may be determined based on a value obtained by subtracting a first predetermined value from the first bit precision. Furthermore, the second order may be determined based on a value obtained by subtracting a second predetermined value from the second bit precision. And when both the first bit precision and the second bit precision are 12 bits, the first order may be determined to be 7 to 10, and the second order may be determined to be 10 or 11, for example. In this case, the first predetermined value may be set to 2 to 5, and the second predetermined value may be set to 1 or 2, for example.

Information about the first bit precision, the second bit precision, the first predetermined value, the second predetermined value, a quantization width of the first quantization, a quantization width of the second quantization and the like may be indicated in a header of a sequence, a frame, or a slice. Here, the quantization width of the first quantization may be different between the three-dimensional coordinate position and the texture map coordinate position. Similarly, the quantization width of the second quantization may be different between the three-dimensional coordinate position and the texture map coordinate position.

Furthermore, the three-dimensional coordinate position and the texture map coordinate position to be encoded may be a three-dimensional coordinate position and a texture map coordinate position after quantization. Furthermore, the first predetermined value and the second predetermined value may be corrected according to the quantization width. Specifically, the numbers of bits required for representing the quantization widths of the three-dimensional coordinate position and the texture map coordinate position, or values approximately equal thereto, may be added to the first predetermined value and the second predetermined value, respectively.

For example, the first predetermined value and the second predetermined value may reflect the first quantization width and the second quantization width, respectively, and may include values corresponding to the first quantization width and the second quantization width, respectively.

Furthermore, when information of another three-dimensional mesh already encoded can be referred to, the prediction values of the three-dimensional coordinate position and the texture map coordinate position of the vertex of the triangle that is to be encoded first in the three-dimensional mesh may be determined based on the information. Furthermore, the difference from the prediction value may be encoded.

Furthermore, when the difference is encoded, the plus/minus sign may be separately arithmetically encoded. Furthermore, for the absolute value, the arithmetic encoding using the exponential Golomb code described above may be performed. Alternatively, for the difference value including the plus/minus sign, the arithmetic encoding using the exponential Golomb code described above may be performed by mapping the difference value to a positive value.

In this way, arithmetic encoding may be able to be performed by using an exponential Golomb code of an order appropriately set for the magnitude of the value of each of the three-dimensional coordinate position and the texture map coordinate position. Therefore, the code amount required for the three-dimensional coordinate position and the texture map coordinate position may be able to be reduced.

FIG. 37 is a flowchart illustrating encoding processing and decoding processing for a three-dimensional coordinate position and a texture map coordinate position according to this embodiment. Specifically, FIG. 37 illustrates an example of procedures for encoding and decoding coordinates of a leading vertex of a three-dimensional mesh.

First, a parameter for arithmetic encoding or arithmetic decoding of a three-dimensional coordinate position is set (S610). Then, according to the set parameter, arithmetic encoding or arithmetic decoding of the three-dimensional coordinate position is performed (S620). Furthermore, a parameter for arithmetic encoding or arithmetic decoding of a texture map coordinate position is set (S630). Then, according to the set parameter, arithmetic encoding or arithmetic decoding of one or more texture map coordinate positions is performed (S640).

Note that the processing order may be changed. Specifically, the setting of a parameter for a texture map coordinate position (S630), the encoding or decoding of the texture map coordinate position (S640), the setting of a parameter for a three-dimensional coordinate position (S610), and the encoding or decoding of the three-dimensional coordinate position (S620) may be performed in this order.

Furthermore, only one of the processing for the three-dimensional coordinate position (S610 and S620) and the processing for the texture map coordinate position (S630 and S640) may be performed. Furthermore, this processing may be performed for only some of the plurality of components (x, y, and z, or u and v) forming the three-dimensional coordinate position or the texture map coordinate position.

FIG. 38 is a flowchart illustrating processing for setting a parameter for encoding or decoding of a three-dimensional coordinate position according to this embodiment. Specifically, FIG. 38 illustrates an example of the parameter setting processing (S610) for a three-dimensional coordinate position in FIG. 37.

In this example, concerning the three-dimensional coordinate position of the three-dimensional mesh, the bit precision, the first predetermined value, the first quantization width, and the second quantization width are obtained (S611 to S614). Then, according to these values, the order (first order) of the exponential Golomb code used for arithmetic encoding or arithmetic decoding of the three-dimensional coordinate position is set (S615).

For example, a value obtained by subtracting the first predetermined value, the number of digits of the binary representation of the first quantization width, and the number of digits of the binary representation of the second quantization width from the bit precision may be set as the first order. Note that the processing of obtaining various kinds of information (S611 to S614) can be performed in any order. Furthermore, one or both of the processing of obtaining two quantization widths (S613 and S614) may be omitted. In such a case, in the processing of setting the first order (S615), the corresponding quantization width need not be used.

FIG. 39 is a flowchart illustrating processing for setting a parameter for encoding or decoding of a texture map coordinate position according to this embodiment. Specifically, FIG. 39 illustrates an example of the parameter setting processing (S630) for a texture map coordinate position in FIG. 37.

In this example, concerning the texture map coordinate position of the three-dimensional mesh, the bit precision, the second predetermined value, the first quantization width, and the second quantization width are obtained (S631 to S634). Then, according to these values, the order (second order) of the exponential Golomb code used for arithmetic encoding or arithmetic decoding of the texture map coordinate position is set.

For example, a value obtained by subtracting the second predetermined value, the number of digits of the binary representation of the first quantization width, and the number of digits of the binary representation of the second quantization width from the bit precision may be set as the second order. Note that the processing of obtaining various kinds of information (S631 to S634) can be performed in any order. Furthermore, one or both of the processing of obtaining two quantization widths (S633 and S634) may be omitted. In such a case, in the processing of setting the second order (S635), the corresponding quantization width need not be used.

Note that in the decoding processing, the first predetermined value and the second predetermined value may be derived by reading data thereof stored in an encoded stream and decoding the data. Alternatively, the first predetermined value and the second predetermined value may be derived by calculation or reference to a table based on a parameter or an index stored in an encoded stream.

Alternatively, the first predetermined value and the second predetermined value may be derived based on another parameter or may be derived from a value used for decoding of a processed coordinate. In the case of a texture map coordinate position, for example, the other parameter may include information about the size of the texture map. Alternatively, for at least one of the three-dimensional coordinate position and the texture map coordinate position, the order of the exponential Golomb code may be set based on the parameter or index described above, without using the bit precision.

Note that at least any of the order of the exponential Golomb code, the first predetermined value, and the second predetermined value may be set to or derived as a different value in units of any of streams, frames, slices, objects, sub-meshes or the like. In that case, a parameter or index that indicates that a parameter relating to derivation of the order of the exponential Golomb code is stored may be encoded in any of the units described above.

### <Representative example>

FIG. 40 is a flow chart illustrating an example of basic encoding processing according to the present embodiment. For example, circuit 151 of encoding device 100 illustrated in FIG. 24 performs the encoding processing illustrated in FIG. 40 in an operation.

Specifically, for each of faces forming a three-dimensional mesh, circuit 151 encodes a connection type regarding a connection relationship between the face to be processed and a face not yet processed, using arithmetic encoding based on a context (S710). Here, a plurality of exemplary connection types regarding the connection relationship between the face to be processed and a face not yet processed may include a type in which the face to be processed is not connected to any face not yet processed (type E described above, for example).

FIG. 41 is a flowchart illustrating an example of processing included in the basic encoding processing according to the present embodiment. For example, circuit 151 of encoding device 100 illustrated in FIG. 24 performs the processing illustrated in FIG. 41 in the encoding processing (S710) illustrated in FIG. 40.

Specifically, in encoding a current connection type, circuit 151 selects the context to be applied to the arithmetic encoding from among contexts using a previous connection type (S711). Here, the current connection type is the connection type to be encoded. The previous connection type is the connection type encoded before the current connection type.

Accordingly, a context for arithmetic encoding of the current connection type may be able to be selected according to the previous connection type. Therefore, arithmetic encoding of the current connection type that can have a different probability distribution depending on the previous connection type may be able to be performed based on a context selected according to the previous connection type. Therefore, the compressibility may be able to be improved based on the characteristics of the information of the three-dimensional mesh.

For example, the context may be used to determine a probability value for use in the arithmetic encoding. Circuit 151 may perform the arithmetic encoding on the current connection type using the probability value determined based on the context selected using the previous connection type. Accordingly, a probability value suitable for arithmetic encoding of the current connection type may be able to be specified according to the previous connection type. Therefore, the compressibility may be able to be improved.

Furthermore, for example, the previous connection type may be the connection type encoded immediately before the current connection type. Accordingly, a context for arithmetic encoding of the current connection type may be able to be selected according to the immediately preceding connection type. Therefore, arithmetic encoding of the current connection type that can have a different probability distribution depending on the immediately preceding connection type may be able to be performed based on a context selected according to the immediately preceding connection type. Therefore, the compressibility may be able to be improved based on the characteristics of the information of the three-dimensional mesh.

Furthermore, for example, each of the faces may be triangular in shape. Accordingly, the connection type of each of a plurality of triangles forming a three-dimensional mesh may be able to be encoded. In addition, the compressibility of information that indicates a connection relationship between the plurality of triangles may be able to be improved.

Furthermore, for example, the connection type may be any one of types including a type indicating a split in which faces not yet processed are split and connected to the face to be processed. Accordingly, a connection relationship that includes a split at which the face to be processed is connected to two faces not yet processed may be able to be indicated by a connection type. In addition, the compressibility of information that indicates a connection relationship that includes a split may be able to be improved.

Furthermore, for example, circuit 151 may select a first context as the context when the previous connection type is the type indicating the split. Circuit 151 may select a second context different from the first context as the context when the previous connection type is a type different from the type indicating the split.

Accordingly, a context may be able to be selected according to whether the previous connection type is a type indicating a split or another type. In addition, the current connection type may be able to be encoded according to the characteristics of the previous connection type, specifically, whether the previous connection type is a type indicating a split or another type. Therefore, the compressibility of information that indicates a connection relationship that includes a split may be able to be improved.

Furthermore, for example, the connection type may be any one of types specified by Edgebreaker. Accordingly, a connection relationship defined by Edgebreaker may be able to be indicated by a connection type. In addition, the compressibility of information that indicates a connection relationship defined by Edgebreaker may be able to be improved.

Furthermore, for example, circuit 151 may select a first context as the context when the previous connection type is type S specified by the Edgebreaker. Circuit 151 may select a second context different from the first context as the context when the previous connection type is a type different from the type S.

Accordingly, a context may be able to be selected according to whether the previous connection type is type S or another type. In addition, the current connection type may be able to be encoded according to the characteristics of the previous connection type, specifically, whether the previous connection type is type S or another type. Therefore, the compressibility of information that indicates a connection relationship that includes type S defined by Edgebreaker may be able to be improved.

FIG. 42 is a flowchart illustrating another example of the basic encoding processing according to this embodiment. For example, circuit 151 of encoding device 100 illustrated in FIG. 24 performs the encoding processing illustrated in FIG. 42 in operation.

Specifically, circuit 151 performs arithmetic encoding of the three-dimensional coordinate position of a vertex of a face forming a three-dimensional mesh according to the first order obtained by subtracting the first predetermined value from the bit precision of the three-dimensional coordinate position (S721). Furthermore, circuit 151 performs arithmetic encoding of the texture map coordinate position of the vertex according to the second order obtained by subtracting the second predetermined value from the bit precision of the texture map coordinate position (S722).

In this way, arithmetic encoding of a three-dimensional coordinate position may be able to be performed according to a first order suitable for the arithmetic encoding of the three-dimensional coordinate position, and arithmetic encoding of a texture map coordinate position may be able to be performed according to a second order suitable for the arithmetic encoding of the texture map coordinate position. Therefore, arithmetic encoding of a three-dimensional coordinate position may be able to be performed according to the characteristics of the three-dimensional coordinate position, and arithmetic encoding of a texture map coordinate position may be able to be performed according to the characteristics of the texture map coordinate position. Therefore, the compressibility may be able to be improved.

For example, the exponential Golomb code may be used for each of the arithmetic encoding of the three-dimensional coordinate position and the arithmetic encoding of the texture map coordinate position. In this way, the compressibility of information that can be efficiently indicated by the exponential Golomb code may be able to be improved.

Furthermore, for example, the first order may be applied to the exponential Golomb code used for the arithmetic encoding of the three-dimensional coordinate position. The second order may be applied to the exponential Golomb code used for the arithmetic encoding of the texture map coordinate position.

In this way, arithmetic encoding of an exponential Golomb code of a first order that can efficiently indicate a three-dimensional coordinate position may be able to be performed, and arithmetic encoding of an exponential Golomb code of a second order that can efficiently indicate a texture map coordinate position may be able to be performed. Therefore, the compressibility of information of a three-dimensional coordinate position and a texture map coordinate position may be able to be improved.

Furthermore, for example, the first predetermined value may be equal to or greater than the second predetermined value. In this way, the first order and the second order may be able to reflect the characteristics that the variance of a plurality of three-dimensional coordinate positions in the three-dimensional space is relatively low, and the variance of a plurality of texture map coordinate positions in the two-dimensional plane is relatively high. Therefore, the compressibility of information of the three-dimensional coordinate position and the texture map coordinate position may be able to be improved.

FIG. 43 is a flow chart illustrating an example of basic decoding processing according to the present embodiment. For example, circuit 251 of decoding device 200 illustrated in FIG. 25 performs the decoding processing illustrated in FIG. 43 in an operation.

Specifically, for each of faces forming a three-dimensional mesh, circuit 251 decodes a connection type regarding a connection relationship between the face to be processed and a face not yet processed, using arithmetic decoding based on a context (S810). Here, a plurality of exemplary connection types regarding the connection relationship between the face to be processed and a face not yet processed may include a type in which the face to be processed is not connected to any face not yet processed (type E described above, for example).

FIG. 44 is a flowchart illustrating an example of processing included in the basic decoding processing according to the present embodiment. For example, circuit 251 of decoding device 200 illustrated in FIG. 25 performs the processing illustrated in FIG. 44 in the decoding processing (S810) illustrated in FIG. 43.

Specifically, in decoding a current connection type, circuit 251 selects the context to be applied to the arithmetic decoding from among contexts using a previous connection type (S811). Here, the current connection type is the connection type to be decoded. The previous connection type is the connection type decoded before the current connection type.

Accordingly, a context for arithmetic decoding of the current connection type may be able to be selected according to the previous connection type. Therefore, arithmetic decoding of the current connection type that can have a different probability distribution depending on the previous connection type may be able to be performed based on a context selected according to the previous connection type. Therefore, the compressibility may be able to be improved based on the characteristics of the information of the three-dimensional mesh.

For example, the context may be used to determine a probability value for use in the arithmetic decoding. Circuit 251 may perform the arithmetic decoding on the current connection type using the probability value determined based on the context selected using the previous connection type. Accordingly, a probability value suitable for arithmetic decoding of the current connection type may be able to be specified according to the previous connection type. Therefore, the compressibility may be able to be improved.

Furthermore, for example, the previous connection type may be the connection type decoded immediately before the current connection type. Accordingly, a context for arithmetic decoding of the current connection type may be able to be selected according to the immediately preceding connection type. Therefore, arithmetic decoding of the current connection type that can have a different probability distribution depending on the immediately preceding connection type may be able to be performed based on a context selected according to the immediately preceding connection type. Therefore, the compressibility may be able to be improved based on the characteristics of the information of the three-dimensional mesh.

Furthermore, for example, each of the faces may be triangular in shape. Accordingly, the connection type of each of a plurality of triangles forming a three-dimensional mesh may be able to be decoded. In addition, the compressibility of information that indicates a connection relationship between the plurality of triangles may be able to be improved.

Furthermore, for example, the connection type may be any one of types including a type indicating a split in which faces not yet processed are split and connected to the face to be processed. Accordingly, a connection relationship that includes a split at which the face to be processed is connected to two faces not yet processed may be able to be indicated by a connection type. In addition, the compressibility of information that indicates a connection relationship that includes a split may be able to be improved.

Furthermore, for example, circuit 251 may select a first context as the context when the previous connection type is the type indicating the split. Circuit 251 may select a second context different from the first context as the context when the previous connection type is a type different from the type indicating the split.

Accordingly, a context may be able to be selected according to whether the previous connection type is a type indicating a split or another type. In addition, the current connection type may be able to be decoded according to the characteristics of the previous connection type, specifically, whether the previous connection type is a type indicating a split or another type. Therefore, the compressibility of information that indicates a connection relationship that includes a split may be able to be improved.

Furthermore, for example, the connection type may be any one of types specified by Edgebreaker. Accordingly, a connection relationship defined by Edgebreaker may be able to be indicated by a connection type. In addition, the compressibility of information that indicates a connection relationship defined by Edgebreaker may be able to be improved.

Furthermore, for example, circuit 251 may select a first context as the context when the previous connection type is type S specified by the Edgebreaker. Circuit 251 may select a second context different from the first context as the context when the previous connection type is a type different from the type S.

Accordingly, a context may be able to be selected according to whether the previous connection type is type S or another type. In addition, the current connection type may be able to be decoded according to the characteristics of the previous connection type, specifically, whether the previous connection type is type S or another type. Therefore, the compressibility of information that indicates a connection relationship that includes type S defined by Edgebreaker may be able to be improved.

FIG. 45 is a flowchart illustrating another example of the basic decoding processing according to this embodiment. For example, circuit 251 of decoding device 200 illustrated in FIG. 25 performs the decoding processing illustrated in FIG. 45 in operation.

Specifically, circuit 251 performs arithmetic decoding of the three-dimensional coordinate position of a vertex of a face forming a three-dimensional mesh according to the first order obtained by subtracting the first predetermined value from the bit precision of the three-dimensional coordinate position (S821). Furthermore, circuit 251 performs arithmetic decoding of the texture map coordinate position of the vertex according to the second order obtained by subtracting the second predetermined value from the bit precision of the texture map coordinate position (S822).

In this way, arithmetic decoding of a three-dimensional coordinate position may be able to be performed according to a first order suitable for the arithmetic decoding of the three-dimensional coordinate position, and arithmetic decoding of a texture map coordinate position may be able to be performed according to a second order suitable for the arithmetic decoding of the texture map coordinate position. Therefore, arithmetic decoding of a three-dimensional coordinate position may be able to be performed according to the characteristics of the three-dimensional coordinate position, and arithmetic decoding of a texture map coordinate position may be able to be performed according to the characteristics of the texture map coordinate position. Therefore, the compressibility may be able to be improved.

For example, the exponential Golomb code may be used for each of the arithmetic decoding of the three-dimensional coordinate position and the arithmetic decoding of the texture map coordinate position. In this way, the compressibility of information that can be efficiently indicated by the exponential Golomb code may be able to be improved.

Furthermore, for example, the first order may be applied to the exponential Golomb code used for the arithmetic decoding of the three-dimensional coordinate position. The second order may be applied to the exponential Golomb code used for the arithmetic decoding of the texture map coordinate position.

In this way, arithmetic decoding of an exponential Golomb code of a first order that can efficiently indicate a three-dimensional coordinate position may be able to be performed, and arithmetic decoding of an exponential Golomb code of a second order that can efficiently indicate a texture map coordinate position may be able to be performed. Therefore, the compressibility of information of a three-dimensional coordinate position and a texture map coordinate position may be able to be improved.

Furthermore, for example, the first predetermined value may be equal to or greater than the second predetermined value. In this way, the first order and the second order may be able to reflect the characteristics that the variance of a plurality of three-dimensional coordinate positions in the three-dimensional space is relatively low, and the variance of a plurality of texture map coordinate positions in the two-dimensional plane is relatively high. Therefore, the compressibility of information of the three-dimensional coordinate position and the texture map coordinate position may be able to be improved.

FIG. 46 is a block diagram illustrating yet another configuration example of encoding device 100 according to the present embodiment. In this example, encoding device 100 includes arithmetic encoder 710 and selector 711. Selector 711 may be included in arithmetic encoder 710.

Arithmetic encoder 710 is, for example, an electric circuit. Arithmetic encoder 710 may correspond to connection information encoder 102, encoding processor 522, and the like described above and may be implemented by circuit 151 and memory 152 described above.

Selector 711 is, for example, an electric circuit. Selector 711 may correspond to connection information encoder 102, encoding processor 522, and the like described above and may be implemented by circuit 151 and memory 152 described above.

For example, arithmetic encoder 710 encodes, for each of faces forming a three-dimensional mesh, a connection type regarding a connection relationship between the face to be processed and a face not yet processed, using arithmetic encoding based on a context. When arithmetic encoder 710 encodes a current connection type to be encoded, selector 711 selects the context to be applied to the arithmetic encoding from among contexts using a previous connection type encoded before the current connection type.

Accordingly, a context for arithmetic encoding of the current connection type may be able to be selected according to the previous connection type. Therefore, arithmetic encoding of the current connection type that can have a different probability distribution depending on the previous connection type may be able to be performed based on a context selected according to the previous connection type. Therefore, the compressibility may be able to be improved based on the characteristics of the information of the three-dimensional mesh.

FIG. 47 is a block diagram illustrating another configuration example of encoding device 100 according to this embodiment. In this example, encoding device 100 includes three-dimensional coordinate position encoder 721 and texture map coordinate position encoder 722.

Three-dimensional coordinate position encoder 721 is an electric circuit, for example. Three-dimensional coordinate position encoder 721 may correspond to vertex information encoder 101 or encoding processor 522 described above, for example, or may be implemented by circuit 151 and memory 152 described above.

Texture map coordinate position encoder 722 is an electric circuit, for example. Texture map coordinate position encoder 722 may correspond to vertex information encoder 101, attribute information encoder 103, or encoding processor 522 described above, for example, or may be implemented by circuit 151 and memory 152 described above.

For example, three-dimensional coordinate position encoder 721 performs arithmetic encoding of the three-dimensional coordinate position of a vertex of a face forming a three-dimensional mesh according to the first order obtained by subtracting the first predetermined value from the bit precision of the three-dimensional coordinate position. Furthermore, texture map coordinate position encoder 722 performs arithmetic encoding of the texture map coordinate position of the vertex according to the second order obtained by subtracting the second predetermined value from the bit precision of the texture map coordinate position.

In this way, arithmetic encoding of a three-dimensional coordinate position may be able to be performed according to a first order suitable for the arithmetic encoding of the three-dimensional coordinate position, and arithmetic encoding of a texture map coordinate position may be able to be performed according to a second order suitable for the arithmetic encoding of the texture map coordinate position. Therefore, arithmetic encoding of a three-dimensional coordinate position may be able to be performed according to the characteristics of the three-dimensional coordinate position, and arithmetic encoding of a texture map coordinate position may be able to be performed according to the characteristics of the texture map coordinate position. Therefore, the compressibility may be able to be improved.

FIG. 48 is a block diagram illustrating yet another configuration example of decoding device 200 according to the present embodiment. In this example, decoding device 200 includes arithmetic decoder 810 and selector 811. Selector 811 may be included in arithmetic decoder 810.

Arithmetic decoder 810 is, for example, an electric circuit. Arithmetic decoder 810 may correspond to connection information decoder 202, decoding processor 622, and the like described above and may be implemented by circuit 251 and memory 252 described above.

Selector 811 is, for example, an electric circuit. Selector 811 may correspond to connection information decoder 202, decoding processor 622, and the like described above and may be implemented by circuit 251 and memory 252 described above.

For example, arithmetic decoder 810 decodes, for each of faces forming a three-dimensional mesh, a connection type regarding a connection relationship between the face to be processed and a face not yet processed, using arithmetic decoding based on a context. When arithmetic decoder 810 decodes a current connection type to be decoded, selector 811 selects the context to be applied to the arithmetic decoding from among contexts using a previous connection type decoded before the current connection type.

Accordingly, a context for arithmetic decoding of the current connection type may be able to be selected according to the previous connection type. Therefore, arithmetic decoding of the current connection type that can have a different probability distribution depending on the previous connection type may be able to be performed based on a context selected according to the previous connection type. Therefore, the compressibility may be able to be improved based on the characteristics of the information of the three-dimensional mesh.

FIG. 49 is a block diagram illustrating another configuration example of decoding device 200 according to this embodiment. In this example, decoding device 200 includes three-dimensional coordinate position decoder 821 and texture map coordinate position decoder 822.

Three-dimensional coordinate position decoder 821 is an electric circuit, for example. Three-dimensional coordinate position decoder 821 may correspond to vertex information decoder 201 or decoding processor 622 described above, for example, or may be implemented by circuit 251 and memory 252 described above.

Texture map coordinate position decoder 822 is an electric circuit, for example. Texture map coordinate position decoder 822 may correspond to vertex information decoder 201, attribute information decoder 203, or decoding processor 622 described above, for example, or may be implemented by circuit 251 and memory 252 described above.

For example, three-dimensional coordinate position decoder 821 performs arithmetic decoding of the three-dimensional coordinate position of a vertex of a face forming a three-dimensional mesh according to the first order obtained by subtracting the first predetermined value from the bit precision of the three-dimensional coordinate position. Furthermore, texture map coordinate position decoder 822 performs arithmetic decoding of the texture map coordinate position of the vertex according to the second order obtained by subtracting the second predetermined value from the bit precision of the texture map coordinate position.

In this way, arithmetic decoding of a three-dimensional coordinate position may be able to be performed according to a first order suitable for the arithmetic decoding of the three-dimensional coordinate position, and arithmetic decoding of a texture map coordinate position may be able to be performed according to a second order suitable for the arithmetic decoding of the texture map coordinate position. Therefore, arithmetic decoding of a three-dimensional coordinate position may be able to be performed according to the characteristics of the three-dimensional coordinate position, and arithmetic decoding of a texture map coordinate position may be able to be performed according to the characteristics of the texture map coordinate position. Therefore, the compressibility may be able to be improved.

In the above description, "connection" may be expressed as "link". Furthermore, "connection type" may be expressed as "connection information" or "link information".

### <Other examples>

Although the aspects of encoding device 100 and decoding device 200 have thus far been described according to the embodiment, the aspects of encoding device 100 and decoding device 200 are not limited to the embodiment. Modifications that may be conceived by a person skilled in the art may be applied to the embodiment, and a plurality of constituent elements in the embodiment may be combined in any manner.

For example, processing performed by a specific constituent element in the embodiment may be performed by a different constituent element instead of the specific constituent element. Moreover, the order of processes may be changed or processes may be performed in parallel.

Moreover, as stated above, it is possible to implement, as an integrated circuit, at least part of the plurality of constituent elements in the present disclosure. At least part of the processes in the present disclosure may be used as an encoding method or a decoding method. A program for causing a computer to execute the encoding method or the decoding method may be used. Furthermore, a non-transitory computer-readable recording medium on which the program is recorded may be used. In addition, a bitstream for causing decoding device 200 to perform decoding may be used.

Moreover, at least part of the plurality of constituent elements and the processes in the present disclosure may be used as a transmitting device, a receiving device, a transmitting method, and a receiving method. A program for causing a computer to execute the transmitting method or the receiving method may be used. Furthermore, a non-transitory computer-readable recording medium on which the program is recorded may be used.

### [Industrial Applicability]

The present disclosure is useful in, for example, an encoding device, a decoding device, a transmitting device, a receiving device, and the like related to a three-dimensional mesh and can be applied to a computer graphics system, a three-dimensional data display system, and the like.

### [Reference Signs List]

- 100: encoding device
- 101, 121, 144: vertex information encoder
- 102, 145: connection information encoder
- 103, 122: attribute information encoder
- 104, 204, 521: preprocessor
- 105, 205, 623: postprocessor
- 110: three-dimensional data encoding system
- 111, 211: controller
- 112, 212: input/output processor
- 113: three-dimensional data encoder
- 114: system multiplexer
- 115: three-dimensional data generator
- 123: metadata encoder
- 124: multiplexer
- 131: vertex image generator
- 132: attribute image generator
- 133: metadata generator
- 134: video encoder
- 141: two-dimensional data encoder
- 142: mesh data encoder
- 143: texture encoder
- 148: description encoder
- 151, 251: circuit
- 152, 252: memory
- 200: decoding device
- 201, 221, 244: vertex information decoder
- 202, 245: connection information decoder
- 203, 222: attribute information decoder
- 210: three-dimensional data decoding system
- 213: three-dimensional data decoder
- 214: system demultiplexer
- 215, 247: presenter
- 216: user interface
- 223: metadata decoder
- 224: demultiplexer
- 231: vertex information generator
- 232: attribute information generator
- 234: video decoder
- 241: two-dimensional data decoder
- 242: mesh data decoder
- 243: texture decoder
- 246: mesh reconstructor
- 248: description decoder
- 300: network
- 310: external connector
- 522: encoding processor
- 531: first quantizer
- 532: prediction/transformation processor
- 533: second quantizer
- 534: binarizer
- 535, 710: arithmetic encoder
- 622: decoding processor
- 631: first inverse quantizer
- 632: prediction/inverse transformation processor
- 633: second inverse quantizer
- 634: inverse binarizer
- 635, 810: arithmetic decoder
- 711, 811: selector
- 721: three-dimensional coordinate position encoder
- 722: texture map coordinate position encoder
- 821: three-dimensional coordinate position decoder
- 822: texture map coordinate position decoder

## Claims

1. An encoding device comprising:
memory; and
a circuit accessible to the memory, wherein
in operation, the circuit:
for each of faces forming a three-dimensional mesh, encodes a connection type regarding a connection relationship between the face to be processed and a face not yet processed, using arithmetic encoding based on a context; and
in encoding a current connection type, selects the context to be applied to the arithmetic encoding from among contexts using a previous connection type, the current connection type being the connection type to be encoded, the previous connection type being the connection type encoded before the current connection type.

2. The encoding device according to claim 1, wherein
the context is used to determine a probability value for use in the arithmetic encoding, and
the circuit performs the arithmetic encoding on the current connection type using the probability value determined based on the context selected using the previous connection type.

3. The encoding device according to claim 1 or 2, wherein
the previous connection type is the connection type encoded immediately before the current connection type.

4. The encoding device according to claim 1 or 2, wherein
each of the faces is triangular in shape.

5. The encoding device according to claim 1 or 2, wherein
the connection type is any one of types including a type indicating a split in which faces not yet processed are split and connected to the face to be processed.

6. The encoding device according to claim 5, wherein
the circuit:
selects a first context as the context when the previous connection type is the type indicating the split; and
selects a second context different from the first context as the context when the previous connection type is a type different from the type indicating the split.

7. The encoding device according to claim 1 or 2, wherein
the connection type is any one of types specified by Edgebreaker.

8. The encoding device according to claim 7, wherein
the circuit:
selects a first context as the context when the previous connection type is type S specified by the Edgebreaker; and
selects a second context different from the first context as the context when the previous connection type is a type different from the type S.

9. A decoding device comprising:
memory; and
a circuit accessible to the memory, wherein
in operation, the circuit:
for each of faces forming a three-dimensional mesh, decodes a connection type regarding a connection relationship between the face to be processed and a face not yet processed, using arithmetic decoding based on a context; and
in decoding a current connection type, selects the context to be applied to the arithmetic decoding from among contexts using a previous connection type, the current connection type being the connection type to be decoded, the previous connection type being the connection type decoded before the current connection type.

10. The decoding device according to claim 9, wherein
the context is used to determine a probability value for use in the arithmetic decoding, and
the circuit performs the arithmetic decoding on the current connection type using the probability value determined based on the context selected using the previous connection type.

11. The decoding device according to claim 9 or 10, wherein
the previous connection type is the connection type decoded immediately before the current connection type.

12. The decoding device according to claim 9 or 10, wherein
each of the faces is triangular in shape.

13. The decoding device according to claim 9 or 10, wherein
the connection type is any one of types including a type indicating a split in which faces not yet processed are split and connected to the face to be processed.

14. The decoding device according to claim 13, wherein
the circuit:
selects a first context as the context when the previous connection type is the type indicating the split; and
selects a second context different from the first context as the context when the previous connection type is a type different from the type indicating the split.

15. The decoding device according to claim 9 or 10, wherein
the connection type is any one of types specified by Edgebreaker.

16. The decoding device according to claim 15, wherein
the circuit:
selects a first context as the context when the previous connection type is type S specified by the Edgebreaker; and
selects a second context different from the first context as the context when the previous connection type is a type different from the type S.

17. An encoding method comprising:
encoding, for each of faces forming a three-dimensional mesh, a connection type regarding a connection relationship between the face to be processed and a face not yet processed, using arithmetic encoding based on a context; and
selecting, in encoding a current connection type, the context to be applied to the arithmetic encoding from among contexts using a previous connection type, the current connection type being the connection type to be encoded, the previous connection type being the connection type encoded before the current connection type.

18. A decoding method comprising:
decoding, for each of faces forming a three-dimensional mesh, a connection type regarding a connection relationship between the face to be processed and a face not yet processed, using arithmetic decoding based on a context; and
selecting, in decoding a current connection type, the context to be applied to the arithmetic decoding from among contexts using a previous connection type, the current connection type being the connection type to be decoded, the previous connection type being the connection type decoded before the current connection type.
